# EUROPEAN PATENT APPLICATION

(11) **EP 4 742 004 A1**
(43) Date of publication of application: **13.05.2026**
(21) Application number: 24852071.0
(22) Date of filing: 01.07.2024
(51) Int. Cl.: G06F 3/01, G06T 19/00, G06F 1/16, G06F 3/04842, G06F 3/04817

(54) **WEARABLE DEVICE FOR EXECUTING ONE OR MORE SOFTWARE APPLICATIONS ON BASIS OF LOCATION OF WEARABLE DEVICE, AND METHOD THEREFOR**

(30) Priority: 05.08.2023 KR 20230102507; 04.10.2023 KR 20230131674
(71) Applicant: Samsung Electronics Co., Ltd., Suwon-si, Gyeonggi-do 16677 (KR)
(72) Inventor: YOO, Sanga, Suwon-si Gyeonggi-do 16677 (KR); LEE, Eunbin, Suwon-si Gyeonggi-do 16677 (KR)
(74) Representative: Gulde & Partner
(86) International application number: PCT/KR2024/009232
(87) International publication number: WO 2025/033715

(57) **Abstract**

A wearable device according to an embodiment comprises: one or more sensors; a display; a memory for storing instructions; and a processor for executing the instructions. The processor is configured to: define, on the basis of scanning for real space, an area including a plurality of regions; identify the location of the wearable device with respect to the area on the basis of sensor data acquired from the one or more sensors; and, on the basis of identifying that the location of the wearable device is included in a first region from among the plurality of regions included in the area, execute the software application related to the first region so as to display, on a display, a screen provided by the software application in order to provide virtual reality.

## Description

### [Technical Field]

The present disclosure relates to a wearable device and a method for executing one or more software applications based on a position of the wearable device.

### [Background Art]

To provide enhanced user experience, an electronic device that provides an augmented reality (AR) service displaying computer-generated information in association with an external object in the real-world is being developed. The electronic device may be a wearable device that may be worn by a user. For example, the electronic device may be AR glasses and/or a head-mounted device (HMD).

The above-described information may be provided as related art for the purpose of helping the understanding of the present disclosure. No claim or determination is raised as to whether any of the above-described content may be applied as prior art related to the present disclosure.

### [Disclosure]

### [Technical Solution]

According to an embodiment, a wearable device may comprise one or more sensors, a display, memory for storing instructions, and at least one processor for executing the instructions. The instructions, when executed by the processor, may cause the wearable device to define a region including a plurality of areas based on a scanning of a physical space. The instructions, when executed by the processor, may cause the wearable device to identify, based on sensor data obtained from the one or more sensors, a position of the wearable device with respect to the region. The instructions, when executed by the processor, may cause the wearable device to, based on identifying that the position of the wearable device is included in a first area among the plurality of areas included in the region, display, by executing a software application associated with the first area, a screen provided by the software application on the display to provide a virtual reality.

According to an embodiment, a method of a wearable device may comprise defining a region including a plurality of areas based on a scanning of a physical space. The method may comprise identifying, based on sensor data obtained from one or more sensors of the wearable device, a position of the wearable device with respect to the region. The method may comprise, based on identifying that the position of the wearable device is included in a first area among the plurality of areas included in the region, displaying, by executing a software application associated with the first area, a screen provided by the software application on a display of the wearable device to provide a virtual reality.

According to an embodiment, a wearable device may comprise one or more sensors, a display, memory for storing instructions, and at least one processor for executing the instructions. The at least one processor may be configured to, in response to an input associated with execution of a first software application among a plurality of software applications, identify, based on sensor data associated with an external space obtained from the one or more sensors, a plurality of areas corresponding to at least one of the plurality of software applications and a region including the plurality of areas. The at least one processor may be configured to display, based on identifying a position of the wearable device included in a first area corresponding to the first software application among the plurality of areas, a first screen provided by the first software application on the display. The at least one processor may be configured to, based on identifying the position of the wearable device spaced apart from the first area, display a second screen for guiding a movement toward the first area.

According to an embodiment, a method of a wearable device may comprise, in response to an input associated with execution of a first software application among a plurality of software applications, identifying, based on sensor data associated with an external space obtained from one or more sensors of the wearable device, a plurality of areas corresponding to at least one of the plurality of software applications and a region including the plurality of areas. The method may comprise displaying, based on identifying a position of the wearable device included in a first area corresponding to the first software application among the plurality of areas, a first screen provided by the first software application on a display of the wearable device. The method may comprise, based on identifying the position of the wearable device spaced apart from the first area, displaying a second screen for guiding a movement toward the first area.

According to an embodiment, a wearable device may comprise one or more sensors, a display, memory for storing instructions, and at least one processor for executing the instructions. The at least one processor may be configured to obtain sensor data associated with a position of the wearable device from the one or more sensors while displaying a first screen associated with virtual reality or augmented reality. The at least one processor may be configured to display, based on identifying, by using the sensor data, a position of the wearable device spaced apart from a first area corresponding to the first screen and positioned in a region that includes a plurality of areas including the first area, a virtual object on the display for adjusting a size of the first area in the region. The at least one processor may be configured to cease displaying the first screen on the display, based on identifying a position of the wearable device spaced apart from the region by using the sensor data.

According to an embodiment, a method of a wearable device may comprise obtaining sensor data associated with a position of the wearable device from one or more sensors of the wearable device while displaying a first screen associated with virtual reality or augmented reality. The method may comprise displaying, based on identifying, by using the sensor data, a position of the wearable device spaced apart from a first area corresponding to the first screen and positioned in a region that includes a plurality of areas including the first area, a virtual object on a display of the wearable device for adjusting a size of the first area in the region. The method may comprise ceasing to display the first screen on the display, based on identifying a position of the wearable device spaced apart from the region by using the sensor data.

### [Description of the Drawings]

FIG. 1 illustrates an embodiment of a wearable device that determines a region and one or more areas in an external space.
FIG. 2 illustrates an example of a block diagram of a wearable device according to an embodiment.
FIG. 3 illustrates an example of a flowchart of a wearable device according to an embodiment.
FIG. 4 illustrates an example of a region and a plurality of areas in an external space identified by a wearable device.
FIG. 5 illustrates an example of a user interface (UI) displayed by a wearable device in a region.
FIG. 6 illustrates an example of a flowchart of a wearable device according to an embodiment.
FIGS. 7A and 7B illustrate an example of an operation of a wearable device for executing a software application based on an area determined in an external space.
FIG. 8 illustrates an example of a flowchart of a wearable device according to an embodiment.
FIGS. 9A, 9B, 9C, 9D, and 9E illustrate exemplary states of a wearable device that displays a screen based on a position with respect to an area.
FIGS. 10A and 10B illustrate exemplary states of a wearable device that displays a screen based on a position with respect to an area.
FIG. 11A illustrates an example of a perspective view of a wearable device according to an embodiment.
FIG. 11B illustrates an example of one or more hardware disposed in a wearable device according to an embodiment.
FIGS. 12A to 12B illustrate an example of an exterior of a wearable device according to an embodiment.

### [Mode for Invention]

Hereinafter, various embodiments of the present document will be described with reference to the accompanying drawings.

The various embodiments of the present document and terms used herein are not intended to limit the technology described in the present document to specific embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "1st", "2nd", "first" or "second", and the like may modify the corresponding components regardless of order or importance, are only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present document may include a unit configured with hardware, software, or firmware, and may be used interchangeably with terms such as logic, logic block, component, or circuit, and the like. The module may be an integrally configured component or a minimum unit or part thereof that performs one or more functions. For example, a module may be configured with an application-specific integrated circuit (ASIC).

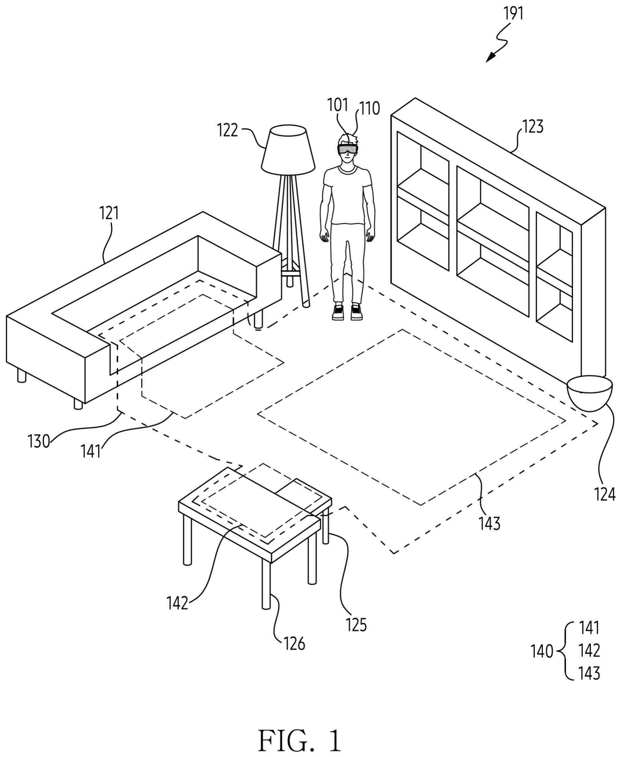

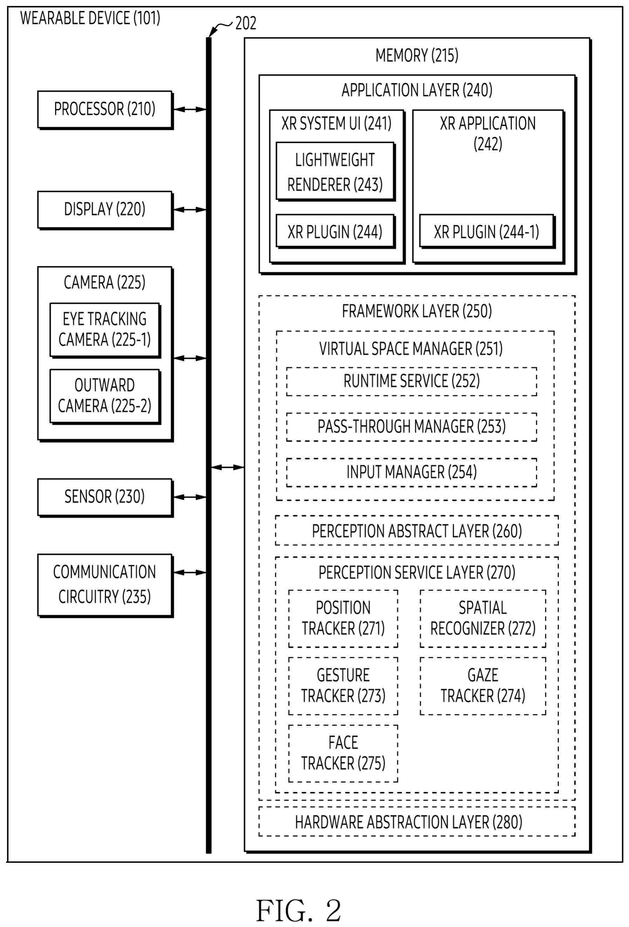

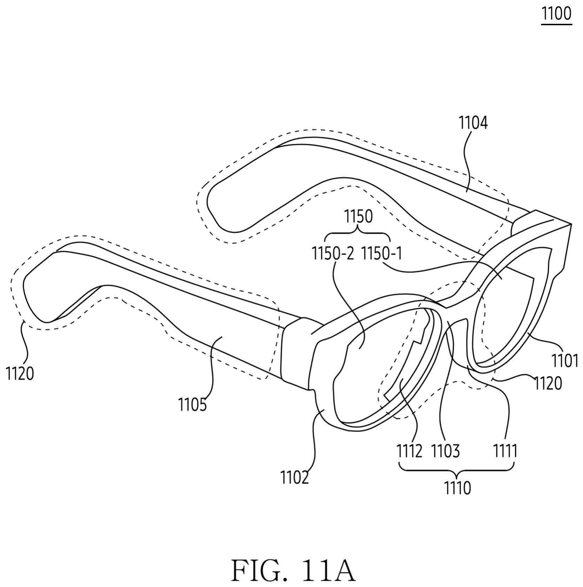

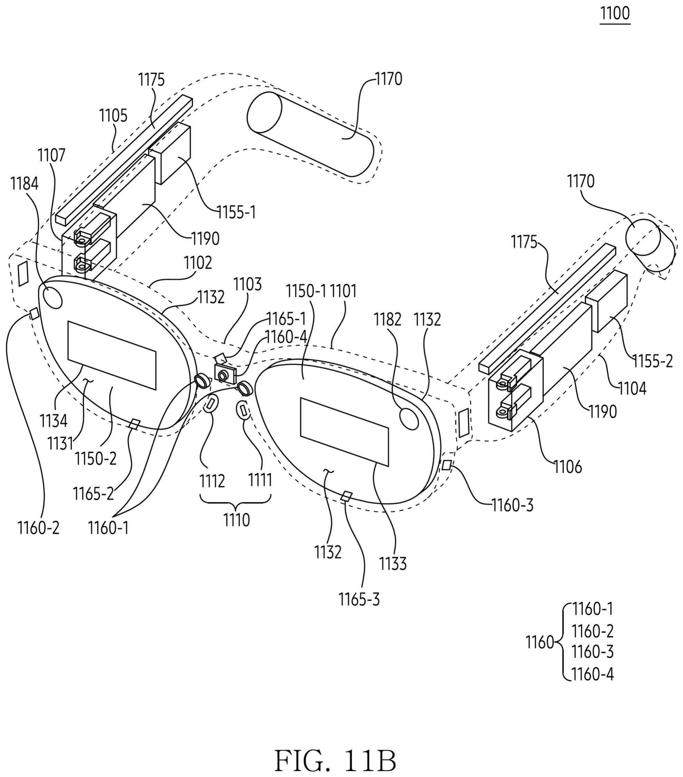

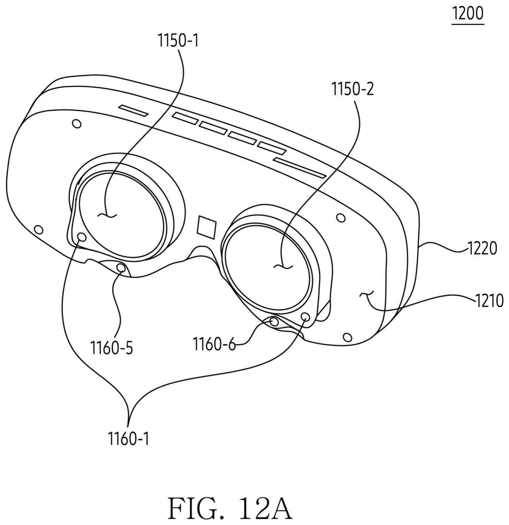

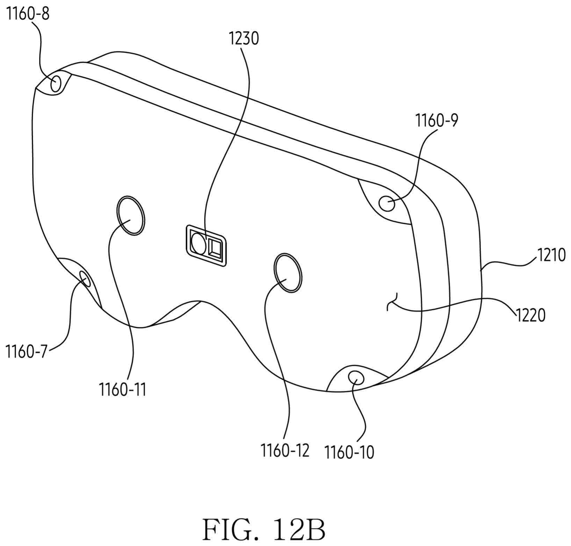

FIG. 1 illustrates an embodiment of a wearable device 101 that determines a region 130 and one or more areas in an external space. The wearable device 101 may include a head-mounted display (HMD) that is wearable on a head of a user 110. The wearable device 101 may be referred to as a head-mount device (HMD), a headgear electronic device, a glasses-type electronic device, a video see-through (or visible see-through) (VST) device, an extended reality (XR) device, a virtual reality (VR) device, and/or an augmented reality (AR) device. Although an external appearance of the wearable device 101 having a shape of glasses is illustrated, an embodiment is not limited thereto. An example of a hardware configuration included in the wearable device 101 is exemplarily described with reference to FIG. 2. An example of a structure of the wearable device 101 wearable on the head of the user 110 is described with reference to FIG. 11A, FIG. 11B, FIG. 12A, and/or FIG. 12B. The wearable device 101 may be referred to as an electronic device. For example, the electronic device may form an HMD by being coupled with an accessory (e.g., a strap) to be attached to the head of the user.

According to an embodiment, the wearable device 101 may execute a function associated with augmented reality (AR) and/or mixed reality (MR). For example, in a state in which the user 110 wears the wearable device 101, the wearable device 101 may include at least one lens disposed adjacent to an eye of the user 110. The wearable device 101 may couple light radiated from a display of the wearable device 101 to ambient light passing through the lens. A displaying area of the display may be formed in the lens through which the ambient light passes. Since the wearable device 101 couples the ambient light and the light radiated from the display, the user 110 may see an image in which a real object recognized by the ambient light and a virtual object formed by the light radiated from the display are mixed. The above-described augmented reality, mixed reality, and/or virtual reality may be referred to as extended reality (XR).

According to an embodiment, the wearable device 101 may execute a function associated with video see-through (or visible see-through) (VST) and/or virtual reality (VR). For example, in a state in which the user 110 wears the wearable device 101, the wearable device 101 may include a housing covering an eye of the user 110. The wearable device 101 may include a display disposed on a first surface of the housing facing the eye in the state. The wearable device 101 may include a camera disposed on a second surface opposite to the first surface. Using the camera, the wearable device 101 may obtain an image and/or a video representing ambient light. The wearable device 101 may output the image and/or the video in the display disposed on the first surface, such that the user 110 is enabled to recognize the ambient light through the display. A displaying area (or displaying region) (or an active area (or active region)) of the display disposed on the first surface may be formed by one or more pixels included in the display. The wearable device 101 may synthesize a virtual object with the image and/or video outputted through the display, such that the user 110 is enabled to recognize the virtual object together with a real object recognized by the ambient light.

According to an embodiment, the wearable device 101 may identify or recognize a position (or location) and/or a direction (or orientation) of the wearable device 101 based on an image (and/or a video) obtained (or acquired) by using a camera. Referring to FIG. 1, in an exemplary state 191 in which the wearable device 101 is included in an external space (e.g., a room) including external objects 121, 122, 123, 124, 125, and 126, the wearable device 101 may obtain information about the external space by using one or more cameras and/or one or more sensors. The information may include a geographic location (e.g., global positioning system (GPS) coordinates) of the external space identified from the one or more sensors. The information may include an image and/or a video of the external space identified from the one or more cameras. The wearable device 101 may perform object recognition on the image and/or the video to identify the external objects 121, 122, 123, 124, 125, and 126 included in the external space from the image and/or the video.

The wearable device 101 may provide a user experience based on virtual reality and/or augmented reality while being worn by the user 110. For example, the wearable device 101 may display a virtual object (or an imaginary object) covering at least a portion of a field-of-view (FoV) of the user 110. When a real object is occluded by the virtual object in the field-of-view, the user 110, failing to recognize the real object, may collide with the real object. According to an embodiment, the wearable device 101 may identify the region 130 having a relatively small collision probability in the external space, based on a distribution (or positional relationship) of real objects (e.g., the external objects 121, 122, 123, 124, 125, and 126) in the external space.

Referring to FIG. 1, the region 130 may be determined based on a collision probability between the user 110 wearing the wearable device 101 and a real object. For example, the collision probability in the region 130 may be lower than a collision probability outside the region 130. For example, the wearable device 101 may determine the region 130 based on a floor of the external space. For example, a portion of the floor not occupied by the external object 123 such as a bookshelf may be included in the region 130. Based on identifying a real object of a preset type (category and/or class) including a sofa (e.g., the external object 121), a chair (e.g., the external object 125), and/or a desk (e.g., the external object 126), the wearable device 101 may insert a portion related to the user 110 (e.g., a top surface of the desk) in the real object, into the region 130. The region 130 may be referred to as a safety region (or a safety zone) or a guardian region, in terms of providing a virtual reality and/or an augmented reality without collision.

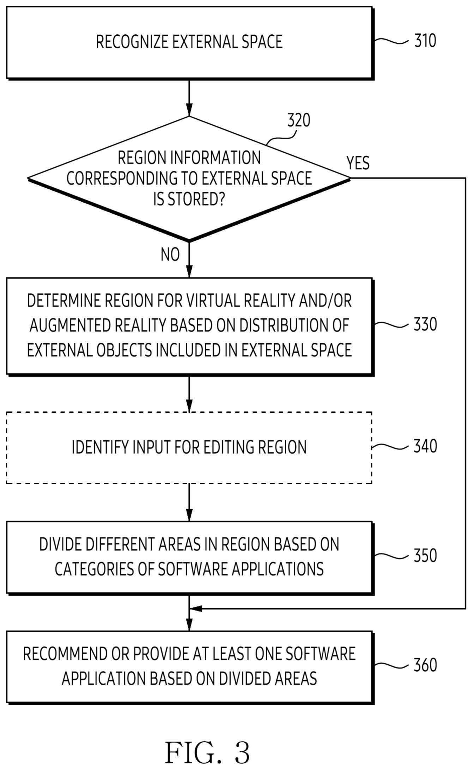

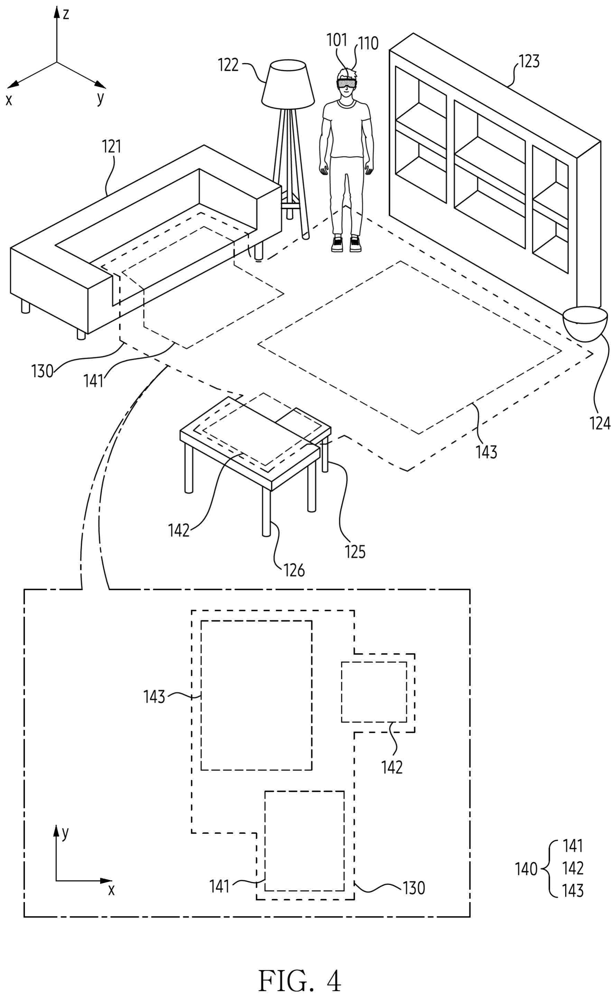

According to an embodiment, the wearable device 101 may divide the region 130 into one or more areas. Referring to FIG. 1, exemplary areas 140 in the region 130 divided by the wearable device 101 are illustrated. The wearable device 101 may determine a plurality of the areas 140 in the region 130 by using real objects included in the region 130. For example, the wearable device 101 may determine a portion of the region 130 including the external object 121 corresponding to the sofa as a first area 141. For example, the wearable device 101 may determine a portion of the region 130 associated with the external objects 125 and 126 corresponding to the chair and the desk, respectively, as a second area 142. For example, the wearable device 101 may determine a portion of the region 130 in which no real object is disposed as a third area 143. The third area 143 may be a portion of the region 130 spaced apart from all included real objects. An operation of the wearable device 101 dividing the areas 140 from the region 130 is described with reference to FIGS. 3 and/or 4.

According to an embodiment, the wearable device 101 may provide a virtual reality and/or an augmented reality to the user 110 wearing the wearable device 101 by using the region 130 and/or the areas 140. For example, when the a position of wearable device 101 and/or the user 110 positioned in any one of the areas 140 is identified, the wearable device 101 may recommend or guide the user 110 to execute one or more software applications associated with an area included in the position. An embodiment is not limited thereto, and the wearable device 101 may execute one or more software applications corresponding to the area included in the position. Based on execution of the one or more software applications, the wearable device 101 may output a screen and/or audio based on virtual reality and/or augmented reality to the user 110.

As described above, the wearable device 101 according to an embodiment may determine the areas 140 corresponding to different software applications by dividing the region 130 for providing a virtual reality and/or an augmented reality. Based on a position of the wearable device 101 with respect to the determined areas 140, the wearable device 101 may execute one or more software applications or may recommend them to the user 110. A position of at least one external object included in the region 130 may be used to determine the areas 140. When the wearable device 101 identifies that the wearable device 101 and/or the user 110 has moved into the region 130, it may guide a movement toward any one area corresponding to a software application executed by the wearable device 101 among the areas 140. The wearable device 101 may identify any one area including the position by comparing a position of the wearable device 101 and/or the user 110 in the region 130 with each of the areas 140. The wearable device 101 may execute at least one software application corresponding to the identified area and/or may recommend it to the user 110.

Hereinafter, an example of a hardware configuration of the wearable device 101 for determining the region 130 and/or the areas 140 is described with reference to FIG. 2.

FIG. 2 illustrates an example of a block diagram of a wearable device 101 according to an embodiment. The wearable device 101 described with reference to FIG. 1 may include at least one of hardware components of the wearable device 101 distinguished by different blocks of FIG. 2.

Referring to FIG. 2, according to an embodiment, the wearable device 101 may include at least one of a processor 210, memory 215, a display 220, a camera 225, a sensor 230, or communication circuitry 235. The processor 210, the memory 215, the display 220, the camera 225, the sensor 230, and/or the communication circuitry 235 may be electrically and/or operably coupled with each other by an electronical component such as a communication bus 202. A type and/or the number of the hardware components included in the wearable device 101 are not limited to those illustrated in FIG. 2. For example, the wearable device 101 may include only some of the hardware components illustrated in FIG. 2.

According to an embodiment, the processor 210 of the wearable device 101 may include a hardware component for processing data based on a plurality of instructions. The hardware component for processing data may include, for example, an arithmetic and logic unit (ALU), a field programmable gate array (FPGA), a central processing unit (CPU), and/or an application processor (AP). In an embodiment, the wearable device 101 may include one or more processors. The processor 210 may have a structure of a multi-core processor such as a dual core, a quad core, a hexa core, and/or an octa core.

According to an embodiment, the memory 215 of the wearable device 101 may include a hardware component for storing data and/or instructions inputted to the processor 210 and/or outputted from the processor 210. The memory 215 may include, for example, a volatile memory such as a random-access memory (RAM) and/or a non-volatile memory such as a read-only memory (ROM). The volatile memory may include, for example, at least one of a dynamic RAM (DRAM), a static RAM (SRAM), a Cache RAM, or a pseudo SRAM (PSRAM). The non-volatile memory may include, for example, at least one of a programmable ROM (PROM), an erasable PROM (EPROM), an electrically erasable PROM (EEPROM), a flash memory, a hard disk, a compact disk, or an embedded multi media card (eMMC). In an embodiment, the memory 215 may be referred to as storage.

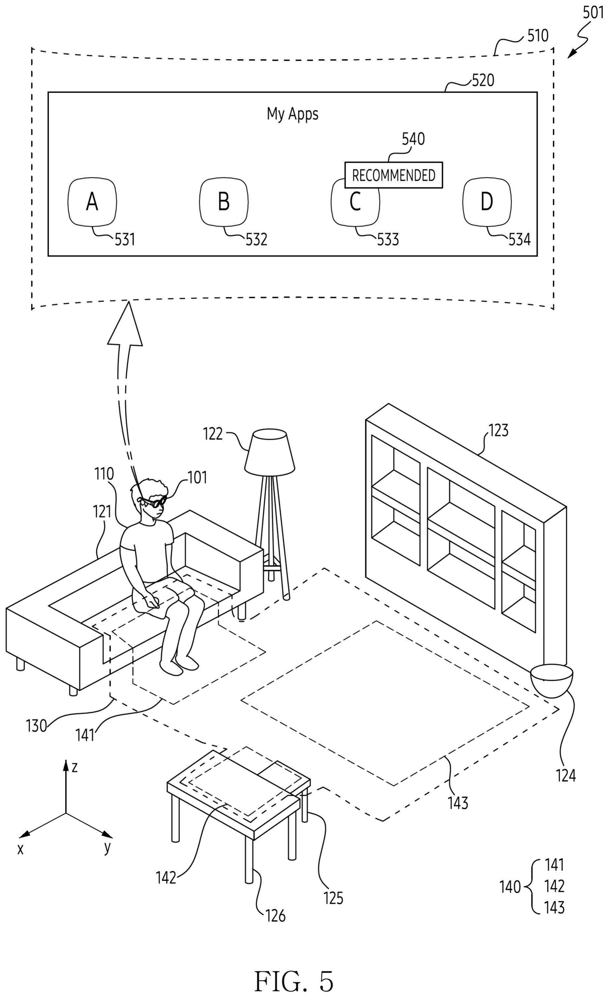

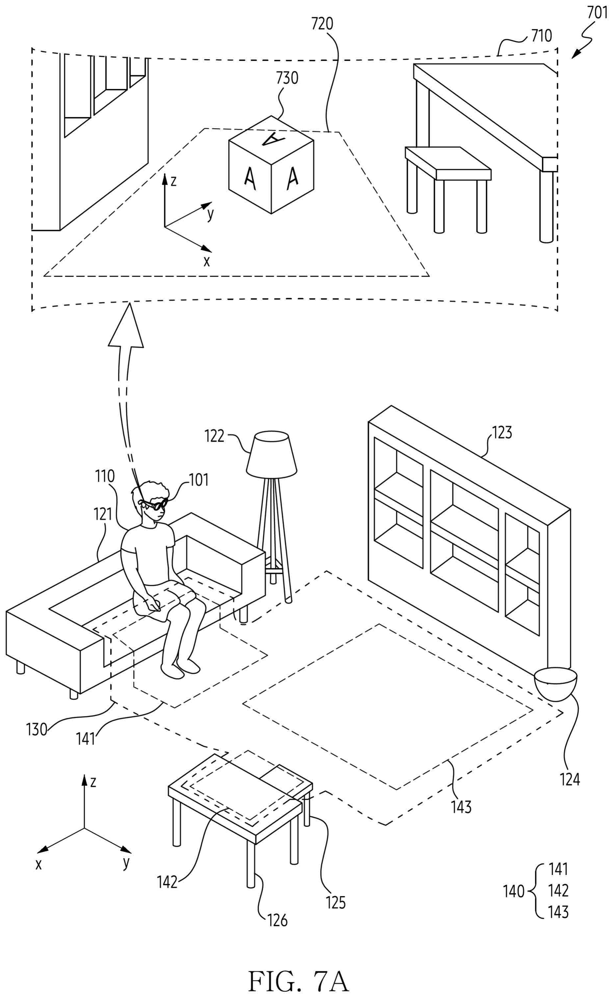

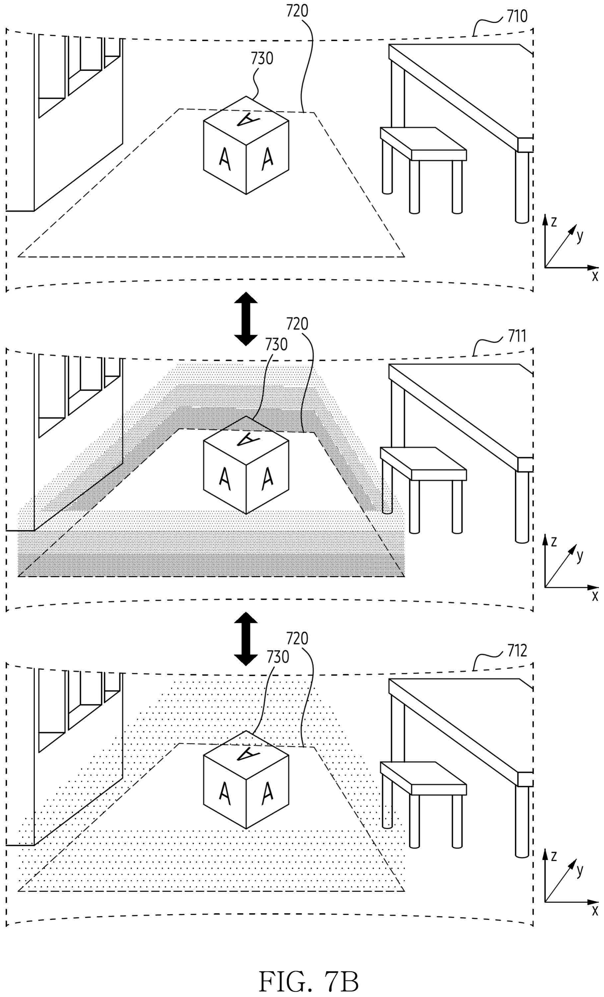

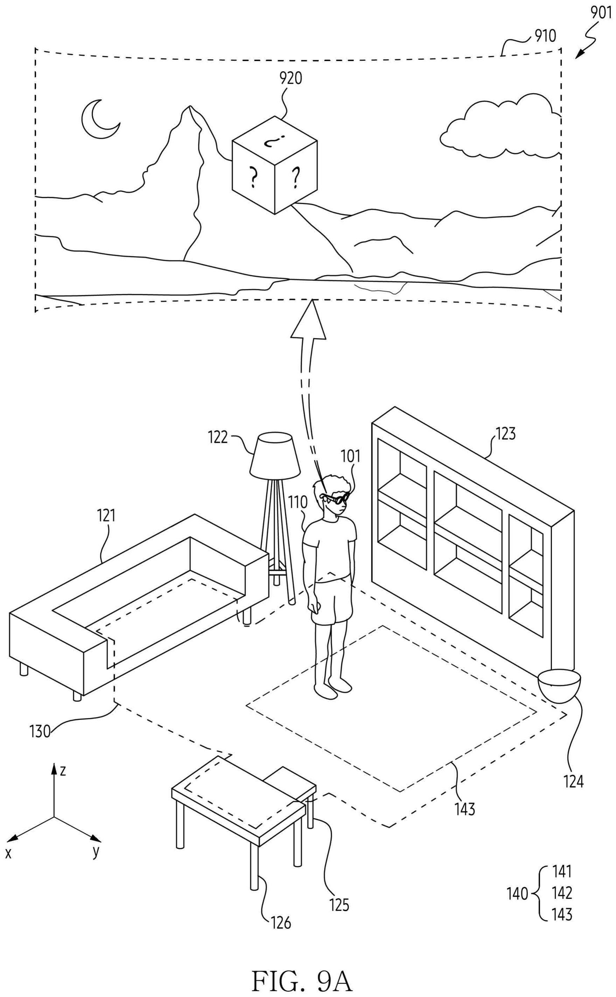

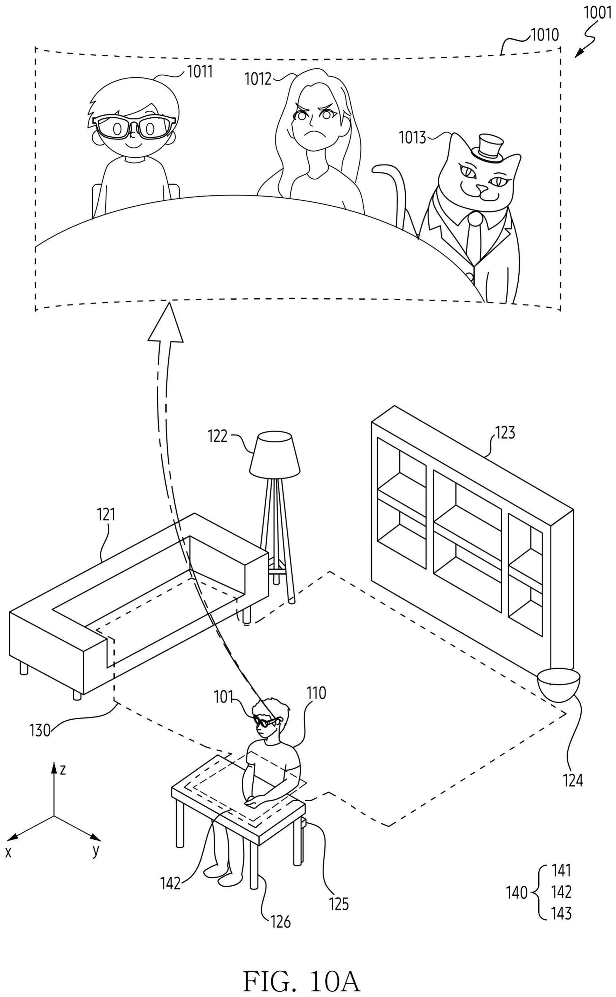

In an embodiment, the display 220 of the wearable device 101 may output visualized information (e.g., a screen 510 of FIG. 5, screens 710, 711, and 712 of FIGS. 7A and/or 7B, a screen 910 of FIGS. 9A to 9E, and/or a screen 1010 of FIGS. 10A to 10B) to a user of the wearable device 101 (e.g., the user 110 of FIG. 1). For example, the display 220 may be configured to visualize information provided from the processor 210 including circuitry such as a graphic processing unit (GPU). The display 220 may include a flexible display, a flat panel display (FPD), and/or electronic paper. The FPD may include a liquid crystal display (LCD), a plasma display panel (PDP), and/or one or more light emitting diodes (LEDs). The LED may include an organic LED (OLED). An embodiment is not limited thereto, and, for example, when the wearable device 101 includes a lens for transmitting external light (or ambient light), the display 220 may include a projector (or a projection assembly) for projecting the light onto the lens. In an embodiment, the display 220 may be referred to as a display panel and/or a display module.

In an embodiment, the camera 225 of the wearable device 101 may include optical sensors (e.g., a charged coupled device (CCD) sensor or a complementary metal oxide semiconductor (CMOS) sensor) that generate an electrical signal indicating a color and/or brightness of light. The camera 225 may be referred to as an image sensor and may be included in the sensor 230 of FIG. 2. A plurality of optical sensors included in the camera 225 may be disposed in a form of a 2 dimensional array. The camera 225 may generate 2 dimensional frame data corresponding to light that has reached the optical sensors of the 2 dimensional array by obtaining electrical signals of each of the plurality of optical sensors substantially simultaneously. For example, photo data captured by using the camera 225 may mean a 2 dimensional frame data obtained from the camera 225. For example, video data captured by using the camera 225 may mean a sequence of a plurality of 2 dimensional frame data obtained from the camera 225 according to a frame rate. The camera 225 may further include a flash light disposed toward a direction in which the camera 225 receives light, and for outputting light toward the direction.

According to an embodiment, the wearable device 101 may include a plurality of cameras disposed toward different directions, as an example of the camera 225. Referring to FIG. 2, the camera 225 included in the wearable device 101 may include an eye tracking camera 225-1 and/or an outward camera 225-2. The eye tracking camera 225-1 may be disposed toward at least one of two eyes of the user wearing the wearable device 101. The processor 210 may identify a direction of a gaze of the user by using an image and/or a video obtained from the eye tracking camera 225-1. The eye tracking camera 225-1 may include an infrared (IR) sensor. The eye tracking camera 225-1 may be referred to as an eye sensor, a gaze tracker, and/or an eye tracker.

Referring to FIG. 2, the outward camera 225-2 may be disposed toward the front of the user wearing the wearable device 101 (e.g., a direction toward which the two eyes may face). The processor 210 may identify an external object (e.g., the external objects 121, 122, 123, 124, 125, and 126 of FIG. 1) by using an image and/or a video obtained from the outward camera 225-2. An embodiment is not limited thereto, and the processor 210 may identify a position, a shape, and/or a gesture of a hand (e.g., a hand gesture) based on an image and/or a video obtained from the outward camera 225-2.

According to an embodiment, the sensor 230 of the wearable device 101 may generate electronic information that may be processed and/or stored by the processor 210 and/or the memory 215 of the wearable device 101 from non-electronic information associated with the wearable device 101. The information may be referred to as sensor data. The sensor 230 may include a global positioning system (GPS) sensor for detecting a geographic location of the wearable device 101, an image sensor, an audio sensor (e.g., a microphone and/or a microphone array), an illuminance sensor, and/or a time-of-flight (ToF) sensor (or a ToF camera).

In an embodiment, the sensor 230 may include an inertial measurement unit (IMU) for detecting physical motion of the wearable device 101. An acceleration sensor, a geomagnetic sensor, a gravity sensor, or any combination thereof may be referred to as an IMU. The acceleration sensor may output an electrical signal indicating gravitational acceleration and/or acceleration of each of a plurality of axes (e.g., an x-axis, a y-axis, and a z-axis) that are perpendicular to each other and based on a preset origin of the wearable device 101. A gyro sensor may output an electrical signal indicating angular velocities (e.g., roll, pitch, and/or yaw) of the plurality of axes. The gyro sensor may be referred to as an angular velocity sensor. The geomagnetic sensor may output an electrical signal indicating a magnitude of a magnetic field formed in the wearable device 101 along each of the plurality of axes (e.g., the x-axis, the y-axis, and/or the z-axis). For example, the acceleration sensor, the gyro sensor, and/or the geomagnetic sensor may repeatedly output sensor data including accelerations, angular velocities, and/or magnitudes of the magnetic field for the number of the plurality of axes based on a preset period (e.g., 1 millisecond).

In an embodiment, the communication circuitry 235 of the wearable device 101 may include circuitry for supporting transmission and/or reception of an electrical signal between the wearable device 101 and an external electronic device. The communication circuitry 235 may include, for example, at least one of a MODEM, an antenna, or an optic/electronic (O/E) converter. The communication circuitry 235 may support transmission and/or reception of an electrical signal based on various types of protocols such as Ethernet, a local area network (LAN), a wide area network (WAN), wireless fidelity (WiFi), Bluetooth, Bluetooth low energy (BLE), ZigBee, long term evolution (LTE), 5G new radio (NR), 6G, and/or above-6G. In an embodiment, the communication circuitry 235 may be referred to as a communication processor and/or a communication module.

According to an embodiment, in the memory 215 of the wearable device 101, one or more instructions (or commands) indicating data to be processed, a computation to be performed, and/or an operation to be performed by the processor 210 of the wearable device 101 may be stored. A set of one or more instructions may be referred to as a program, firmware, an operating system, a process, a routine, a sub-routine, and/or a software application (hereinafter, an application). For example, when a set of a plurality of instructions distributed in a form of an operating system, firmware, a driver, a program, and/or an application is executed, the wearable device 101 and/or the processor 210 may perform at least one of operations of FIG. 3, FIG. 6, and/or FIG. 8. Hereinafter, an installation of an application in the wearable device 101 may mean that one or more instructions provided in a form of an application are stored in the memory 215 and that the one or more applications are stored in a format (e.g., a file having an extension preset by an operating system of the wearable device 101) executable by the processor 210. For example, an application may include a program and/or a library associated with a service provided to a user.

Referring to FIG. 2, programs installed in the wearable device 101 may be classified into any one of different layers including an application layer 240, a framework layer 250, and/or a hardware abstraction layer (HAL) 280 based on a target. For example, in the hardware abstraction layer 280, programs (e.g., a module or a driver) designed to target hardware (e.g., the display 220, the camera 225, the sensor 230, and/or the communication circuitry 235) of the wearable device 101 may be classified. The framework layer 250 may be referred to as an extended reality (XR) framework layer in terms of including one or more programs for providing an XR service. For example, layers illustrated in FIG. 2 are logically (or for convenience of description) distinguished, and may not necessarily mean that an address space of the memory 215 is distinguished by the layers.

For example, programs (e.g., a position tracker 271, a spatial recognizer 272, a gesture tracker 273, a gaze tracker 274, and/or a face tracker 275) classified into the framework layer 250 may generate information processed by another program classified into the hardware abstraction layer 280 and/or the application layer 240. Programs classified into the framework layer 250 may provide an application programming interface (API) executable (or invokable or callable) based on another program.

For example, in the application layer 240, a program designed to target the user of the wearable device 101 may be classified. The application layer 240 may include an extended reality (XR) system user interface (UI) 241 and/or an XR application 242. For example, programs (e.g., software application) classified into the application layer 240 may cause execution of a function supported by programs classified into the framework layer 250 by invoking an application programming interface (API).

For example, the wearable device 101 may display one or more visual objects for performing interaction with a user for using a virtual space on the display 220 based on execution of the XR system UI 241. A visual object may mean an object deployable in a screen for transmission of information and/or interaction such as text, an image, an icon, a video, a button, a checkbox, a radio button, a text box, a slider, and/or a table. A visual object may be referred to as a visual guide, a virtual object, a visual element, a UI element, a view object, and/or a view element. The wearable device 101 may provide functions available in a virtual space to the user based on execution of the XR system UI 241.

Referring to FIG. 2, a lightweight renderer 243 and/or an XR plugin 244 are illustrated as being included in the XR system UI 241, but an embodiment is not limited thereto. For example, based on the XR system UI 241, the processor 210 may execute the lightweight renderer 243 and/or the XR plugin 244 in the framework layer 250.

For example, the wearable device 101 may obtain a resource (e.g., an API, a system process, and/or a library) used to define, generate, and/or execute a rendering pipeline in which partial change is permitted, based on execution of the lightweight renderer 243. The lightweight renderer 243 may be referred to as a lightweight render pipeline in terms of defining a rendering pipeline in which partial change is permitted. The lightweight renderer 243 may include a renderer built before execution of a software application (e.g., a prebuilt renderer). For example, the wearable device 101 may obtain a resource (e.g., an API, a system process, and/or a library) used to define, generate, and/or execute an entire rendering pipeline based on execution of the XR plugin 244. The XR plugin 244 may be referred to as an open XR native client in terms of defining (or setting) an entire rendering pipeline.

For example, the wearable device 101 may display a screen indicating at least a portion of a virtual space on the display 220 based on execution of the XR application 242. An XR plugin 244-1 included in the XR application 242 may include instructions supporting a function similar to that of the XR plugin 244 of the XR system UI 241. In a description of the XR plugin 244-1, a description overlapping a description of the XR plugin 244 may be omitted. The wearable device 101 may cause execution of a virtual space manager 251 based on execution of the XR application 242.

According to an embodiment, the wearable device 101 may provide a virtual space service based on execution of the virtual space manager 251. For example, the virtual space manager 251 may include a platform for supporting the virtual space service. The wearable device 101 may identify a virtual space formed based on a position of the user indicated by data obtained through the sensor 230, based on execution of the virtual space manager 251, and may display at least a portion of the virtual space on the display 220. The virtual space manager 251 may be referred to as a composition presentation manager (CPM).

For example, the virtual space manager 251 may include a runtime service 252. As an example, the runtime service 252 may be referred to as an OpenXR runtime module (or an OpenXR runtime program). The wearable device 101 may execute at least one of a user pose prediction function, a frame timing function, and/or a spatial input function based on execution of the runtime service 252. As an example, the wearable device 101 may perform rendering for a virtual space service for the user based on execution of the runtime service 252. For example, a function associated with the virtual space, which is executable by the application layer 240, may be supported based on execution of the runtime service 252.

For example, the virtual space manager 251 may include a pass-through manager 253. While displaying a screen indicating a virtual space on the display 220, the wearable device 101 may display another screen indicating a real space obtained through the outward camera 225-2 by overlapping at least a portion of the screen, based on execution of the pass-through manager 253.

For example, the virtual space manager 251 may include an input manager 254. The wearable device 101 may identify data (e.g., sensor data) obtained by executing one or more programs included in a perception service layer 270 based on execution of the input manager 254. The wearable device 101 may identify a user input associated with the wearable device 101 by using the obtained data. The user input may be associated with motion (e.g., a hand gesture), a gaze, and/or an utterance of the user, which are identified by the sensor 230.

For example, a perception abstract layer 260 may be used for data exchange between the virtual space manager 251 and the perception service layer 270. The perception abstract layer 260 may be referred to as an interface in terms of being used for data exchange between the virtual space manager 251 and the perception service layer 270. As an example, the perception abstract layer 260 may be referred to as OpenPX. The perception abstract layer 260 may be used for a perception client and a perception service.

According to an embodiment, the perception service layer 270 may include one or more programs for processing data obtained from the sensor 230 and/or the camera 225. The one or more programs may include at least one of the position tracker 271, the spatial recognizer 272, the gesture tracker 273, the gaze tracker 274, the face tracker 275, and/or an interface processor 276. A type and/or the number of the one or more programs included in the perception service layer 270 are not limited to those illustrated in FIG. 2.

For example, the wearable device 101 may identify a pose of the wearable device 101 by using the sensor 230 based on execution of the position tracker 271. The wearable device 101 may identify a 6 degrees of freedom pose (6 dof pose) of the wearable device 101 by using data obtained using the outward camera 225-2 and/or an IMU (e.g., a gyro sensor, an acceleration sensor, and/or a geomagnetic sensor) based on execution of the position tracker 271. The position tracker 271 may be referred to as a head tracking (HeT) module (or a head tracker or a head tracking program).

For example, the wearable device 101 may obtain information for providing a 3 dimensional virtual space corresponding to a surrounding environment (e.g., an external space) of the wearable device 101 (or the user of the wearable device 101) based on execution of the spatial recognizer 272. The wearable device 101 may reconstruct the surrounding environment of the wearable device 101 in 3 dimensions by using data obtained using the outward camera 225-2 based on execution of the spatial recognizer 272. The wearable device 101 may identify at least one of a plane, a slope, or stairs based on the surrounding environment of the wearable device 101 reconstructed in 3 dimensions based on execution of the spatial recognizer 272. The spatial recognizer 272 may be referred to as a scene understanding (SU) module (or a scene understanding program).

For example, the wearable device 101 may identify (or recognize) a pose and/or a gesture of a hand of the user of the wearable device 101 based on execution of the gesture tracker 273. As an example, the wearable device 101 may identify a pose and/or a gesture of the hand of the user by using data obtained from the outward camera 225-2 based on execution of the gesture tracker 273. As an example, the wearable device 101 may identify a pose and/or a gesture of the hand of the user based on data (or an image) obtained by using the outward camera 225-2 based on execution of the gesture tracker 273. The gesture tracker 273 may be referred to as a hand tracking (HaT) module (or a hand tracking program) and/or a gesture tracking module.

For example, the wearable device 101 may identify (or track) a movement of an eye of the user of the wearable device 101 based on execution of the gaze tracker 274. As an example, the wearable device 101 may identify the movement of the eye of the user by using data obtained from the eye tracking camera 225-1 based on execution of the gaze tracker 274. The gaze tracker 274 may be referred to as an eye tracking (ET) module (or an eye tracking program) and/or a gaze tracking module.

For example, the perception service layer 270 of the wearable device 101 may further include the face tracker 275 for tracking a face of the user. For example, the wearable device 101 may identify (or track) a movement of the face of the user and/or an expression of the user based on execution of the face tracker 275. The wearable device 101 may estimate an expression of the user based on the movement of the face of the user based on execution of the face tracker 275. As an example, the wearable device 101 may identify the movement of the face of the user and/or an expression of the user based on data (e.g., an image) obtained by using the sensor 230 (e.g., an image sensor facing at least a portion of the face of the user) based on execution of the face tracker 275.

According to an embodiment, the processor 210 of the wearable device 101 may identify a position of the wearable device 101 in an external space indicated by information obtained from the camera 225 and/or the sensor 230. Based on the position, the wearable device 101 may provide at least a portion of a virtual space mapped to (or linked to) the external space. For example, the wearable device 101 may determine a position of the wearable device 101 in the virtual space based on the position. The position determined in the virtual space may correspond to a reference point (e.g., a view point) displaying a portion of the virtual space to be displayed through the display 220. The processor 210 of the wearable device 101 may execute one or more instructions for identifying the position in the external space by executing the position tracker 271 of FIG. 2.

According to an embodiment, the processor 210 of the wearable device 101 may obtain information associated with an external space including the wearable device 101 based on execution of the spatial recognizer 272. The operation of the processor 210 obtaining information associated with the external space may be referred to as spatial recognition and/or spatial scanning. Based on spatial recognition, the processor 210 may identify at least one real object (e.g., the external objects 121, 122, 123, 124, 125, and 126 of FIG. 1) included in the external space. The processor 210 may determine a region (e.g., the region 130 of FIG. 1) for providing a virtual reality and/or an augmented reality by using information obtained based on spatial recognition and/or spatial scanning.

The processor 210 may generate or determine different areas (e.g., the areas 140 of FIG. 1) in the region based on one or more software applications (e.g., software applications classified as the application layer 240) installed in the wearable device 101. The area may be associated with, correspond to, and/or be connected to at least one software application. The processor 210 may divide one or more areas in the region based on properties (and/or features) of each of the software applications. For example, the processor 210 may divide at least one area based on a size (e.g., a size of an activity area), width, height, extent, and/or radius set by a software application. The areas in the region may not overlap with each other. Alternatively, the areas in the region may be spaced apart from each other.

When the wearable device 101 and/or the user is positioned in any one area of the areas, the processor 210 that divided a plurality of areas in the region may execute a function associated with the area. The function may include an operation of recommending at least one software application associated with the area among a plurality of software applications installed in the wearable device 101. The function may include an operation of executing at least one software application associated with the area. The function may include an operation of providing a virtual reality and/or an augmented reality provided from the at least one software application. The function may include an operation for providing immersive user experience, such as active noise cancellation (ANC).

In any one area in which the wearable device 101 is positioned, the processor 210 may identify a movement of the wearable device 101 out of the area while executing a function associated with the area. In response to the movement, the processor 210 may perform an operation for re-executing the function. For example, the processor 210 may guide the user wearing the wearable device 101 to move back into the area. For example, the processor 210 may at least temporarily cease execution of the function associated with the area.

As described above, the processor 210 of the wearable device 101 according to an embodiment may divide an area matching a user experience provided by a software application in a region formed for safety of a user based on virtual reality and/or augmented reality. When a plurality of software applications are installed in the wearable device 101, the processor 210 may determine an area corresponding to at least one of the plurality of software applications from the region. The processor 210 may improve a user experience associated with virtual reality and/or augmented reality by using an area included in the region. For example, even when the user moves out of the area, as long as the user is included in the region including the area, the processor 210 may maintain execution of a software application corresponding to the area and may maintain providing the user experience based on the software application.

Hereinafter, an exemplary operation performed by the processor 210 of the wearable device 101 according to an embodiment is described with reference to FIG. 3.

FIG. 3 illustrates an example of a flowchart of a wearable device according to an embodiment. The wearable device 101 of FIGS. 1 and 2 and/or the processor 210 of FIG. 2 may perform at least one of operations of FIG. 3. The operations of FIG. 3 may be associated with an operation of a processor that has executed the spatial recognizer 272 of FIG. 2.

Referring to FIG. 3, in operation 310, the processor of the wearable device according to an embodiment may recognize an external space. The processor may identify the shape of the external space based on an image and/or a video obtained from a camera (e.g., the camera 225 and/or the outward camera 225-2 of FIG. 2). The processor may identify at least one external object included in the external space based on the image and/or the video. Identifying an external object by the processor may include an operation of identifying a position of the external object in the external space and/or a size of a space occupied by the external object. The processor may verify a position and/or a direction of the wearable device in the external space by using a sensor 230 (e.g., an IMU).

Referring to FIG. 3, in operation 320, the processor of the wearable device according to an embodiment may identify whether region information corresponding to the external space is stored. The region information may be matched to the external space recognized based on the operation 310. The region information may be stored in memory (e.g., the memory 215 of FIG. 2) of the wearable device. The region information may include an identifier (e.g., an ID and/or GPS coordinates of the external space) of the external space corresponding to the region information. The region information may include data indicating one or more areas divided from the region. In a state in which the region information stored in the wearable device is identified (320-YES), the processor may perform operation 360 based on the region information. When the region information is not identified from the memory of the wearable device (320-NO), the processor may perform operation 330.

Referring to FIG. 3, in the operation 330, the processor of the wearable device according to an embodiment may determine a region for a virtual reality and/or an augmented reality based on a distribution of external objects included in the external space. The external objects of the operation 330 may be identified based on object recognition on the image and/or the video outputted from the camera. Based on the operation 330, the processor may determine at least a portion of the external space having a relatively low probability of collision with the external objects as the region of the operation 330. The region of the operation 330 may include the region 130 of FIG. 1. For example, the processor may identify a region formed to provide a virtual reality and/or an augmented reality based on data from the sensor and/or the camera. Based on the operation 330, the processor of the wearable device may perform scanning on a physical space. Based on the scanning, the processor may define a region including a plurality of areas.

Referring to FIG. 3, in operation 340, the processor of the wearable device according to an embodiment may identify an input for editing the region. The operation 340 may be optionally performed by the processor. Based on the operation 340, the processor may visualize the region determined by the operation 330 on a display (e.g., the display 220 of FIG. 2). For example, the processor may display a virtual object indicating the region on the display. Based on a hand gesture, a gaze, and/or an utterance of a user associated with the virtual object, the processor may identify the input of the operation 340. In response to the input, the processor may change the region determined by the operation 330.

Referring to FIG. 3, in operation 350, the processor of the wearable device according to an embodiment may divide different areas in the region based on categories of software applications. The software applications of the operation 350 may be installed in the memory of the wearable device. Based on the categories identified by properties of the respective software applications, the processor may divide areas corresponding to the respective categories from the region. Each of areas divided based on the operation 350 may correspond to the respective categories. The processor may store region information indicating the areas divided based on the operation 350 in the memory of the wearable device.

Referring to FIG. 3, in the operation 360, the processor of the wearable device according to an embodiment may recommend or provide at least one software application based on the divided areas. The processor may perform the operation 360 based on the areas indicated by the region information of the operation 320. The divided areas of the operation 360 may be identified based on the operation 350. Based on the operation 360, the processor may guide the user to one or more software applications included in the categories corresponding to the respective areas. Based on the operation 360, the processor may execute one or more software applications associated with any one of the areas in which the wearable device is positioned. Based on execution of the one or more software applications, the processor may provide a user experience associated with virtual reality and/or augmented reality.

Hereinafter, an exemplary operation of the wearable device that determines the region and/or the areas in the external space by performing the operations of FIG. 3 is described with reference to FIG. 4.

FIG. 4 illustrates an example of a region 130 and a plurality of areas 140 in an external space identified by a wearable device 101. The wearable device 101 of FIGS. 1 and 2 and/or the processor 210 of FIG. 2 may perform an operation of the wearable device 101 of FIG. 4. The operation of the wearable device 101 described with reference to FIG. 4 may be associated with at least one of the operations of FIG. 3.

Referring to FIG. 4, in an exemplary external space including external objects 121, 122, 123, 124, 125, and 126, the wearable device 101 may determine the region 130 based on a spatial scan. The region 130 may be associated with positional relationships of the external objects 121, 122, 123, 124, 125, and 126 in the external space, a position (e.g., an altitude of the wearable device 101 from a floor of the external space) of the wearable device 101 in the external space, and/or a posture of a user 110 wearing the wearable device 101.

For example, as shown in FIG. 4, the wearable device 101 may determine the region 130 in the external space by using the position and/or the altitude of the wearable device 101 based on a posture of the standing user 110. When the user 110 wearing the wearable device 101 sits on the external object 121 such as a sofa, the wearable device 101 may determine the region 130 having a size and/or a shape associated with the seated posture of the user 110. When identifying a change in the posture of the user 110, the wearable device 101 may change a size, a shape, and/or a position of the region 130 in the external space based on the changed posture. An embodiment is not limited thereto, and the wearable device 101 may change the shape and/or the size of the region 130 based on a user input for editing the region 130.

Referring to FIG. 4, an example of a position and/or a size of the areas 140 determined in the region 130 is illustrated. A first area 141 may be determined based on a portion of the region 130 associated with the external object 121 such as a sofa. A second area 142 may be determined as a portion of the region 130 in which the external objects 125 and 126 corresponding to a desk and a chair are positioned. A third area 143 may be determined as a portion of the external space separated from all external objects. A portion of a boundary line of the third area 143 may be adjacent to or overlap with a boundary line of the region 130. Another portion of the boundary line of the third area 143 may be adjacent to another area (e.g., the first area 141 and/or the second area 142). The wearable device 101 may store information (e.g., the region information of FIG. 3) indicating a combination of the region 130 and the areas 140.

The wearable device 101 may determine at least one software application corresponding to the respective areas 140 based on shapes of the areas 140 and/or an external object included in the respective areas 140. For example, with respect to the third area 143 having the largest size among the areas 140, the wearable device 101 may match a software application (e.g., a game and/or a health application) requiring high-intensity physical activity. Respective software applications installed in the wearable device 101 may include a property indicating a minimum size of an area corresponding to a software application. The processor may match a software application having a minimum size less than the size of the third area 143 to the third area 143 based on the property.

For example, with respect to the second area 142 associated with the desk (e.g., the external object 126) and/or the chair (e.g., the external object 125), the wearable device 101 may match a software application (e.g., a word processor co-work application and/or a video conference application) associated with the desk and/or the chair. When identifying a plurality of desks in the external space, the wearable device 101 may match different software applications to each of the plurality of desks based on sizes and/or heights of the plurality of desks. A connection relationship between the plurality of desks and the software applications may be changed by the user 110 wearing the wearable device 101.

For example, with respect to the first area 141 associated with a sofa (e.g., the external object 121), the wearable device 101 may match a software application for playback of media content (e.g., a video). A result of matching the areas 140 to at least one software application may be stored in the wearable device 101. Based on a history of executing a software application in at least one of the areas 140, the wearable device 101 may match the areas 140 with at least one application.

According to an embodiment, the wearable device 101 may identify a position of the wearable device 101 and/or the user 110 in the external space based on an image and/or a video obtained from a camera (e.g., the camera 225 and/or the outward camera 225-2 of FIG. 2). For example, the wearable device 101 that identifies a position of a specific body part (e.g., a head and/or a hand) of the user 110 may identify a specific area including the position among the areas 140. For example, the wearable device 101 may identify any one area corresponding to the wearable device 101 by comparing a position of the wearable device 101 in the external space with each of the areas 140. When the wearable device 101 is connected to a remote controller (e.g., a remote controller having a shape grabbable by a hand of the user 110), the wearable device 101 may identify any one area in which the wearable device 101 and/or the user 110 is positioned by comparing a position of the remote controller with the areas 140. The wearable device 101 may recommend or may execute at least one software application based on the identified area.

Hereinafter, an exemplary operation in which the wearable device 101 positioned in any one of the areas 140 guides execution of at least one software application is described.

FIG. 5 illustrates an example of a user interface (UI) displayed by a wearable device 101 in a region 130. The wearable device 101 of FIGS. 1 and 2 and/or the processor 210 of FIG. 2 may perform an operation of the wearable device 101 of FIG. 5. The operation of the wearable device 101 described with reference to FIG. 5 may be associated with at least one of the operations of FIG. 3.

Referring to FIG. 5, an exemplary state 501 of the wearable device 101 providing a list of software applications installed in the wearable device 101 is illustrated. Referring to FIG. 5, in a screen 510 displayed on a display (e.g., the display 220 of FIG. 2), the wearable device 101 may display a virtual object 520 including the list of software applications. The virtual object 520 may have a shape of a 2 dimensional quadrangle. The virtual object 520 may be referred to as a panel. The screen 510 including the list of software applications may be referred to as a home screen (or a launcher screen).

The wearable device 101 may display the screen 510 based on virtual reality and/or augmented reality. For example, in another portion of the screen 510 distinguished from the virtual object 520, the wearable device 101 may display an image and/or a virtual object (e.g., a background object) based on virtual reality. For example, in the other portion of the screen 510 distinguished from the virtual object 520, the wearable device 101 may display an image and/or a video (e.g., a video in which an external environment is captured) obtained from a camera (e.g., the outward camera 225-2 of FIG. 2). The wearable device 101 may provide a user experience based on VST by using the image and/or the video obtained from the camera.

On the virtual object 520, the wearable device 101 may display icons 531, 532, 533, and 534 corresponding to each of a plurality of software applications installed in the wearable device 101. Although four icons 531, 532, 533, and 534 corresponding to four software applications are exemplarily illustrated, an embodiment is not limited thereto. The icons 531, 532, 533, and 534 may include a 2 dimensional image provided from the software application. An embodiment is not limited thereto, and the icons 531, 532, 533, and 534 may have a stereoscopic shape such as a rectangular parallelepiped.

Referring to FIG. 5, in the exemplary state 501 identifying the region 130 and areas 140 included in the region 130, the wearable device 101 may determine any one area corresponding to the wearable device 101 among the areas 140. For example, the wearable device 101 may identify or may determine any one area in which the wearable device 101 and/or a user 110 wearing the wearable device 101 is positioned among the areas 140.

Referring to FIG. 5, the exemplary state 501 in which the user 110 wearing the wearable device 101 is positioned in a first area 141 is illustrated. In the state 501 in which a position of the wearable device 101 included in the first area 141 is identified, the wearable device 101 may search for or may identify one or more software applications included in a category associated with the first area 141. The wearable device 101 may determine one or more software applications associated with the first area 141 based on at least one of a size of the first area 141, categories of respective software applications, and/or an external object 121 included in the first area 141. The wearable device 101 may guide the user 110 to the determined one or more software applications.

For example, in the state 501 providing the list of software applications based on the screen 510, the wearable device 101 may display a visual object 540 emphasizing at least one software application associated with the first area 141. For example, the wearable device 101 may display the visual object 540 including preset text such as "Recommended" overlaid on an icon 533 representing the software application associated with the first area 141. The visual object 540 may be referred to as a badge and/or an indicator for the icon 533.

In the state 501 displaying the screen 510 including the list of software applications, the wearable device 101 may receive an input associated with any one of the icons 531, 532, 533, and 534 corresponding to each of the software applications. The input may be identified based on a gaze of the user 110 directed toward any one of the icons 531, 532, 533, and 534, a hand gesture (e.g., a pinch gesture and/or a pointing gesture) associated with any one of the icons 531, 532, 533, and 534, and/or an utterance associated with any one of the icons 531, 532, 533, and 534. In response to the input, the wearable device 101 may execute a software application corresponding to an icon associated with the input. The wearable device 101 may display a screen provided by the software application on the display.

As described above, the wearable device 101 according to an embodiment may guide execution of one or more software applications based on a current position of the wearable device 101 and/or the user 110 (e.g., the user 110 wearing the wearable device 101). For example, the wearable device 101 may identify the one or more software applications by comparing the plurality of areas 140 included in the region 130 with the current position. In an embodiment, the wearable device 101 that has received an input for executing a software application may execute the software application based on an area associated with the software application. For example, based on whether the wearable device 101 and/or the user 110 is positioned in a specific area suitable for execution of the software application in the region 130, the wearable device 101 may execute the software application.

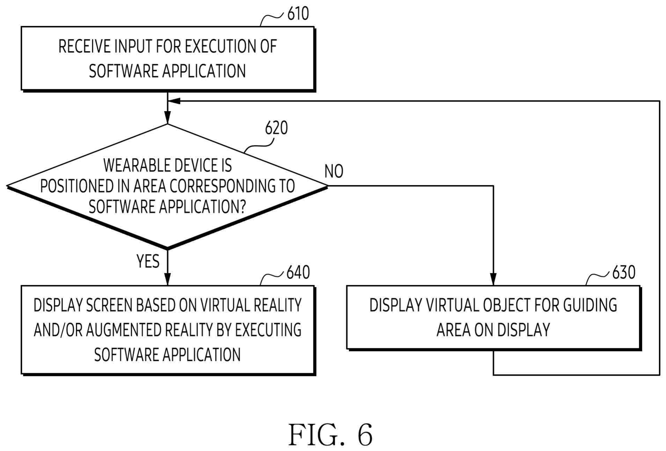

Hereinafter, an operation of the wearable device 101 executing a software application based on the current position of the wearable device 101 and/or the user 110 is described with reference to FIG. 6.

FIG. 6 illustrates an example of a flowchart of a wearable device according to an embodiment. The wearable device 101 of FIGS. 1 and 2 and/or the processor 210 of FIG. 2 may perform at least one of operations of FIG. 6. The operations of FIG. 6 may be associated with at least one of the operations of FIG. 3.

Referring to FIG. 6, in operation 610, a processor of the wearable device according to an embodiment may receive an input for execution of a software application. The processor may identify the input of the operation 610 based on a gaze, a hand gesture, an utterance, or a combination thereof, of a user wearing the wearable device, which is recognized based on data from a camera (e.g., the camera 225 of FIG. 2) and/or a sensor (e.g., the sensor 230 of FIG. 2). Based on receiving the input of the operation 610, the processor may perform operation 620.

Referring to FIG. 6, in the operation 620, the processor of the wearable device according to an embodiment may identify whether the wearable device is positioned in an area corresponding to the software application. The processor may perform the operation 620 by using a position of the wearable device identified based on data from the camera and/or the sensor. An embodiment is not limited thereto, and the processor may perform the operation 620 based on a position of a body part (e.g., a head, a hand, and/or a foot) of the user wearing the wearable device and/or a position of a remote controller connected to the wearable device.

The processor may identify the area corresponding to the software application based on a property of the software application identified by the input. The area may be included in a region (e.g., the region 130 of FIG. 1) identified to provide a virtual reality and/or an augmented reality, such as the areas 140 of FIG. 1. The processor may identify whether the wearable device is positioned in the area by comparing the position of the wearable device with the area. When the wearable device is positioned in the area corresponding to the software application (620-YES), the processor may perform operation 640. When the wearable device is positioned outside the area of the operation 620 (620-NO), the processor may perform operation 630.

Referring to FIG. 6, in the operation 630, the processor of the wearable device according to an embodiment may display a virtual object for guiding the area on a display (e.g., the display 220 of FIG. 2). The processor may perform the operation 630 based on augmented reality (or mixed reality) among virtual reality or augmented reality. For example, the processor may display a virtual object having a position associated with at least a portion of the display corresponding to the area in an external space visible through the display. The virtual object may have a shape of a virtual fence for indicating the area for executing the software application of the operation 610. An exemplary shape of the virtual object of the operation 630 is exemplarily described with reference to FIG. 7B. Referring to FIG. 6, in a state in which the virtual object of the operation 630 is displayed, the processor may perform the operation 620 to monitor whether the wearable device enters the area guided by the virtual object.

Referring to FIG. 6, in the operation 640, the processor of the wearable device according to an embodiment may display a screen based on virtual reality and/or augmented reality by executing the software application. When a current position of the wearable device is included in the area corresponding to the software application associated with the input of the operation 610, the processor may execute the software application. The processor may display, on the display, the screen provided from the software application and based on virtual reality and/or augmented reality.

As described above, the wearable device according to an embodiment may conditionally execute a software application by using the position of the wearable device and/or the user wearing the wearable device. For example, when the position is included in an area suitable for execution of the software application, the processor may execute the software application. Hereinafter, an exemplary UI displayed by the wearable device performing the operation of FIG. 6 is described with reference to FIGS. 7A and/or 7B.

FIGS. 7A and 7B illustrate an example of an operation of a wearable device 101 for executing a software application based on an area determined in an external space. The wearable device 101 of FIGS. 1 and 2 and/or the processor 210 of FIG. 2 may perform the operation of the wearable device 101 of FIGS. 7A and/or 7B. The operation of the wearable device 101 described with reference to FIGS. 7A and/or 7B may be associated with at least one of the operations of FIG. 3 and/or FIG. 6.

Referring to FIG. 7A, an exemplary state 701 of the wearable device 101 that has identified an input associated with execution of a software application is illustrated. The input may be identified by a gaze, a hand gesture, and/or an utterance with respect to any one of the icons 531, 532, 533, and 534 of FIG. 5. In response to the input, the wearable device 101 may obtain data associated with an external space from a sensor (e.g., the sensor 230 of FIG. 2) and/or a camera (e.g., the camera 225 of FIG. 2). Based on the data, the wearable device 101 may identify a region 130 included in the external space and a plurality of areas 140 included in the region 130. The processor may identify a specific area suitable for execution of the software application corresponding to the input among the areas 140.

Referring to FIG. 7A, in the state 701 in which an input for executing a software application associated with a third area 143 among the areas 140 is received, the wearable device 101 may compare a position of the wearable device 101 and/or a user 110 with the third area 143. Based on identifying the position of the wearable device 101 and/or the user 110 included in the third area 143, the wearable device 101 may display a first screen provided by the software application on a display (e.g., the display 220 of FIG. 2). For example, when the wearable device 101 and/or the user 110 is positioned in the third area 143, the processor may obtain the first screen to be displayed on the display by directly executing the software application based on the input.

When the wearable device 101 and/or the user 110 is spaced apart from the third area 143 corresponding to the software application, the wearable device 101 may display a screen 710 for guiding a movement toward the third area 143. In the exemplary state 701 of FIG. 7A, based on identifying a position (e.g., a position in a first area 141) of the wearable device 101 and/or the user 110 spaced apart from the third area 143, the wearable device 101 may display the screen 710 for guiding a movement toward the third area 143. The wearable device 101 may display the screen 710 based on augmented reality.

Referring to the exemplary screen 710 of FIG. 7A, the wearable device 101 may display a virtual object (e.g., virtual objects 720 and 730) overlaid on a portion of the screen 710 associated with the third area 143 in the screen 710. The wearable device 101 displaying the screen 710 including the virtual object 720 may guide the user 110 wearing the wearable device 101 to move toward the third area 143 distinguished by the virtual object 720. The virtual object 720 may have a shape of a line drawn on a floor of the external space visible through the screen 710.

For example, the virtual object 720 may have a shape of a boundary line of the third area 143. According to an embodiment, the wearable device 101 may verify whether the external space to be displayed through the screen 710 includes the third area 143 and/or a floor corresponding to the third area 143. When at least a portion of the floor corresponding to the third area 143 is visible through the screen 710, the wearable device 101 may display at least a portion of the virtual object 720 having a shape of a boundary line of the floor (or an outline of the floor).

In an embodiment, together with the virtual object 720, the wearable device 101 may display the virtual object 730 having a shape of a 3 dimensional icon corresponding to the software application in the screen 710. Referring to FIG. 7A, the virtual object 730 that is a rectangular parallelepiped (or a cube) including at least one surface on which a 2 dimensional image (e.g., an icon of the software application) is disposed is exemplarily illustrated, but an embodiment is not limited thereto. In the screen 710, the virtual object 730 may float on the third area 143.

While displaying the screen 710, the wearable device 101 may identify the position of the wearable device 101 and/or the user 110 with respect to the third area 143. For example, the wearable device 101 may identify a movement of the wearable device 101 and/or the user 110 into the third area 143. In response to the movement, the wearable device 101 may display, in the screen 710, another screen which is provided from the software application corresponding to the virtual object 730 and is different from the screen 710.

The shape of the virtual object 720 displayed in the screen 710 to guide a movement toward the third area 143 is not limited to the shape of the 2 dimensional line drawn on the floor of FIG. 7A. Referring to FIG. 7B, different shapes of the visual object 720 for guiding a shape and/or a position of the third area 143 are illustrated. As in the screen 710 of FIG. 7B, the wearable device 101 may display a virtual object 720 having a shape of a 2 dimensional line (e.g., a dashed line) drawn on a floor visible through the screen 710. As in the screen 711 of FIG. 7B, the wearable device 101 may display a virtual object 720 having a shape of a fence (or a wall) extended toward a height (e.g., a +z axis direction) from the 2 dimensional line drawn on the floor.

Referring to FIG. 7B, on the virtual object 720 displayed through the screen 711, the wearable device 101 may gradually decrease transparency according to an altitude. An embodiment is not limited thereto, and the wearable device 101 may gradually change a color of the virtual object 720 displayed in the screen 711 according to the altitude (e.g., a gradation). For example, the color of the virtual object 720 may gradually change from a color (e.g., a representative color) of the virtual object 730 and/or the software application corresponding to the virtual object 730 to another color (e.g., a gradation). In the screen 712, at least a portion of the virtual object 720 may be transparent.

Referring to FIG. 7B, the screen 712 including the virtual object 720 for guiding a shape and/or a position of the third area 143 is exemplarily illustrated. The virtual object 720 may guide the third area 143 based on a plurality of dots. Through the plurality of dots, the user 110 of the wearable device 101 may see the external space visible through the screen 712 and the virtual object 720 with respect to the third area 143. Based on the virtual object 720 having a shape of a virtual fence, the wearable device 101 may visualize the third area 143. The wearable device 101 may cause the user 110 to move into the virtual fence by using the virtual object 720.

As described above, the wearable device 101 according to an embodiment may execute any one software application among the plurality of software applications based on a current position of the wearable device 101 and/or the user 110. Based on execution of the software application, the wearable device 101 may display a screen for virtual reality and/or augmented reality. When an area corresponding to the software application (e.g., the third area 143 of FIG. 7A) includes the current position of the wearable device 101 and/or the user 110, the wearable device 101 may display the screen provided from the software application. When the area (e.g., the third area 143 of FIG. 7A) is outside the current position of the wearable device 101 and/or the user 110, the wearable device 101 may display the virtual object 720 for visualizing the area based on augmented reality.

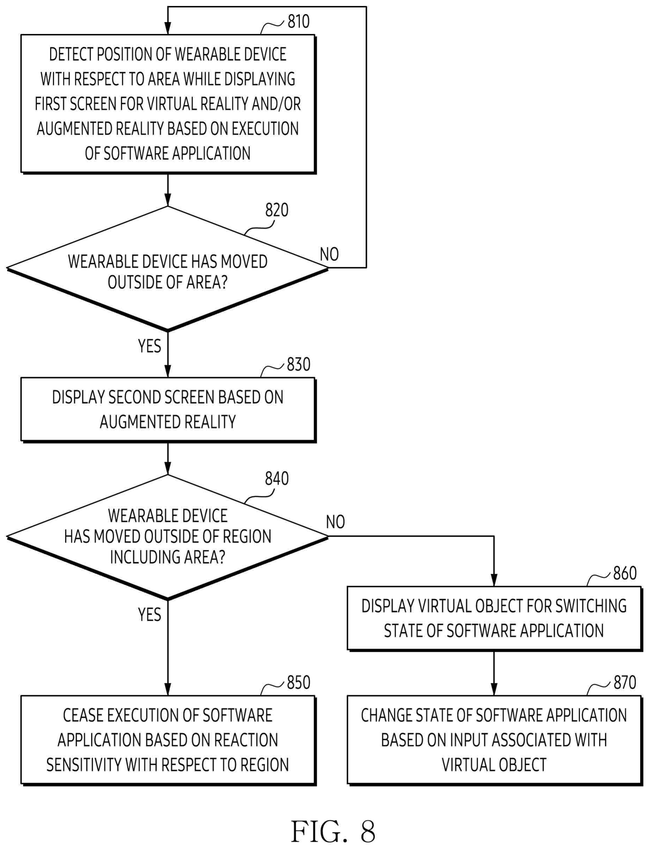

Hereinafter, an exemplary operation of the wearable device 101 that has executed a software application corresponding to a specific area in the specific area is described with reference to FIG. 8.

FIG. 8 illustrates an example of a flowchart of a wearable device according to an embodiment. The wearable device 101 of FIGS. 1 and 2 and/or the processor 210 of FIG. 2 may perform at least one of operations of FIG. 8. The operations of FIG. 8 may be associated with an operation of a processor that has executed the spatial recognizer 272 of FIG. 2.

Referring to FIG. 8, in operation 810, a processor of the wearable device according to an embodiment may detect a position of the wearable device with respect to an area while displaying a first screen for virtual reality and/or augmented reality based on execution of a software application. The area of the operation 810 may be associated with the software application of the operation 810 among areas (e.g., the areas 140 of FIG. 1) included in a region (e.g., the region 130 of FIG. 1) formed to provide a virtual reality and/or an augmented reality. The processor may track or identify a position of the wearable device to be compared with the area by using a camera (e.g., the camera 225 and/or the outward camera 225-2 of FIG. 2) and/or a sensor (e.g., the sensor 230 of FIG. 2).

Referring to FIG. 8, in operation 820, the processor of the wearable device according to an embodiment may identify whether the wearable device has moved out of the area. When the position detected based on the operation 810 is spaced apart from the area associated with the software application (820-YES), the processor may perform operation 830. When the position detected based on the operation 810 is included in the area corresponding to the software application (820-NO), the processor may continuously detect or identify the position of the wearable device based on the operation 810.

Referring to FIG. 8, in operation 830, the processor of the wearable device according to an embodiment may display a second screen based on augmented reality. The second screen may be provided from the software application of the operation 810 to at least partially maintain a user experience of the first screen of the operation 810. The processor may notify a user wearing the wearable device of a state of the wearable device that has moved out of the area, by using the second screen based on augmented reality. In an embodiment, the processor of the wearable device may display a virtual object for changing an execution state of the software application of the operation 810 in the second screen. Based on an input associated with the virtual object, the processor may change the execution state. The execution state of the software application switchable based on the virtual object may include at least one of an active state, a paused state, or a terminated state.

Referring to FIG. 8, in operation 840, the processor of the wearable device according to an embodiment may identify whether the wearable device has moved out of a region including the area. The region of the operation 840 may be formed in an external space to safely provide a virtual reality and/or an augmented reality. The region of the operation 840 may include the region 130 of FIG. 1. When the wearable device has moved out of the region (840-YES), the processor may perform operation 850. When the wearable device is included in the region (840-NO), the processor may perform operation 860.

Referring to FIG. 8, in operation 850, the processor of the wearable device according to an embodiment may cease execution of the software application based on a reaction sensitivity with respect to the region. The reaction sensitivity may be a sensitivity used to determine whether to cease provision of virtual reality and/or augmented reality in response to motion of the wearable device and/or the user moving out of the region. For example, at least one of a threshold distance between a boundary line of the region and the wearable device (or the user), a threshold duration of being outside of the region, and/or a threshold frequency of moving out of the region may be controlled by the reaction sensitivity. When the wearable device and/or the user has moved out of the region beyond at least one of the above-described threshold distance, threshold duration, and/or threshold frequency, the processor may cease execution of the software application based on the operation 850.

In an embodiment, the reaction sensitivity of the operation 850 may be associated with a category of the software application (e.g., the software application of the operation 810) executed by the wearable device. For example, when executing a software application requiring rapid actions of the user, such as a game, the reaction sensitivity of the operation 850 may be set relatively sensitively. For example, at least one of the threshold distance, the threshold duration, and/or the threshold frequency may be decreased. For another example, when executing a software application requiring relatively fewer actions, such as a word processor, the reaction sensitivity of the operation 850 may be relaxed. For example, at least one of the threshold distance, the threshold duration, and/or the threshold frequency may be increased. The processor that has ceased execution of the software application based on the operation 850 may display a virtual object for resuming execution of the software application, and may receive an input for resuming execution of the software application from the user through the virtual object.

Referring to FIG. 8, in operation 860, the processor of the wearable device according to an embodiment may display a virtual object for switching the state of the software application. The state of the operation 860 may be an execution state of the software application and may include at least one of an active state, a paused state, or a terminated state. The virtual object of the operation 860 may have a shape of a dialog box.

Referring to FIG. 8, in operation 870, the processor of the wearable device according to an embodiment may change the state of the software application based on an input associated with the virtual object. In an embodiment displaying the virtual object having a shape of a dialog box, the processor may perform the operation 870 based on an input indicating selection of any one of a plurality of buttons included in the dialog box. In response to the input of the operation 870, the processor may maintain or at least temporarily cease execution of the software application.

Hereinafter, an exemplary UI displayed by the wearable device performing the operation of FIG. 8 is described with reference to FIGS. 9A to 9E.

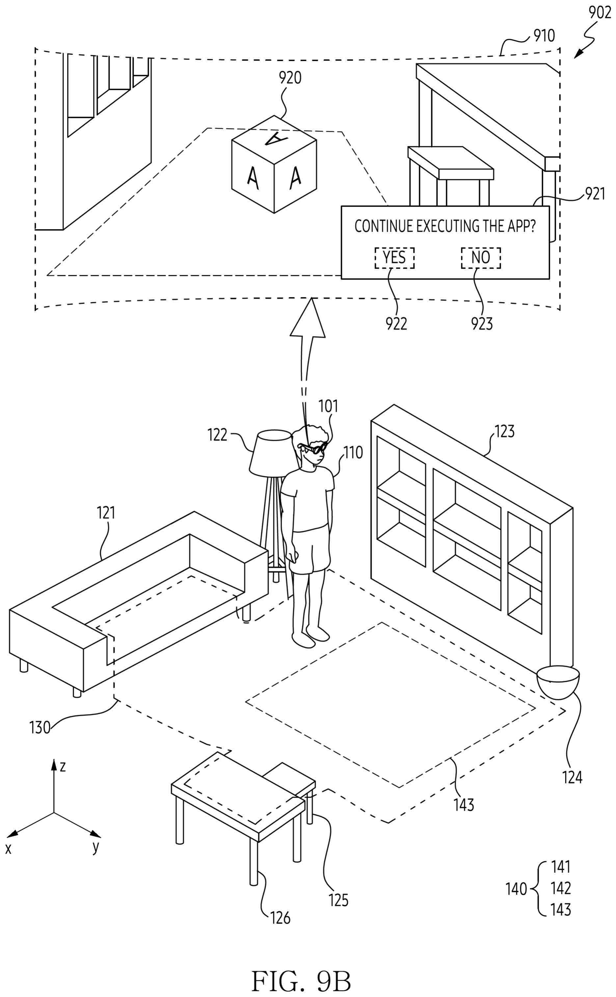

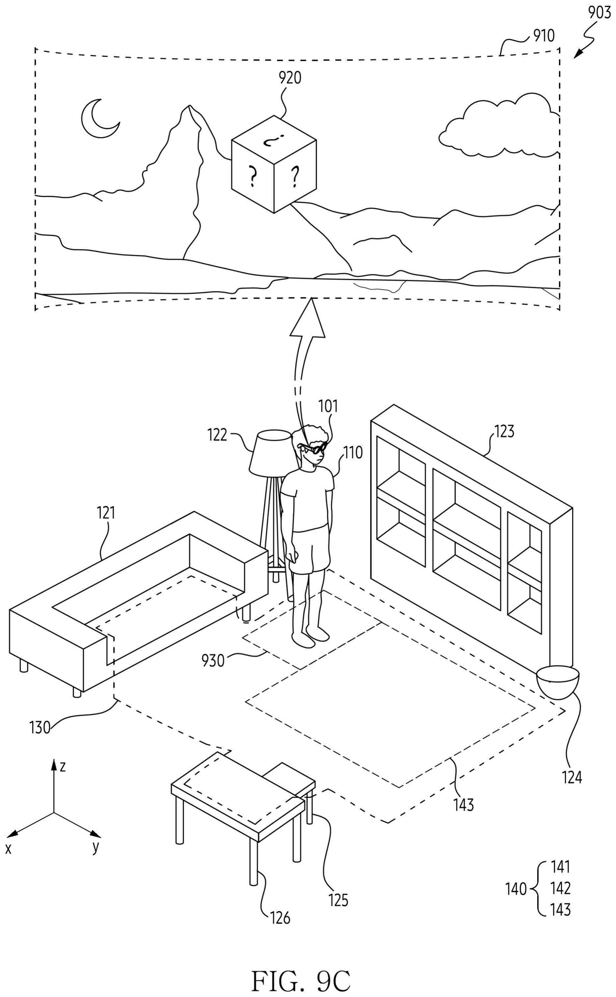

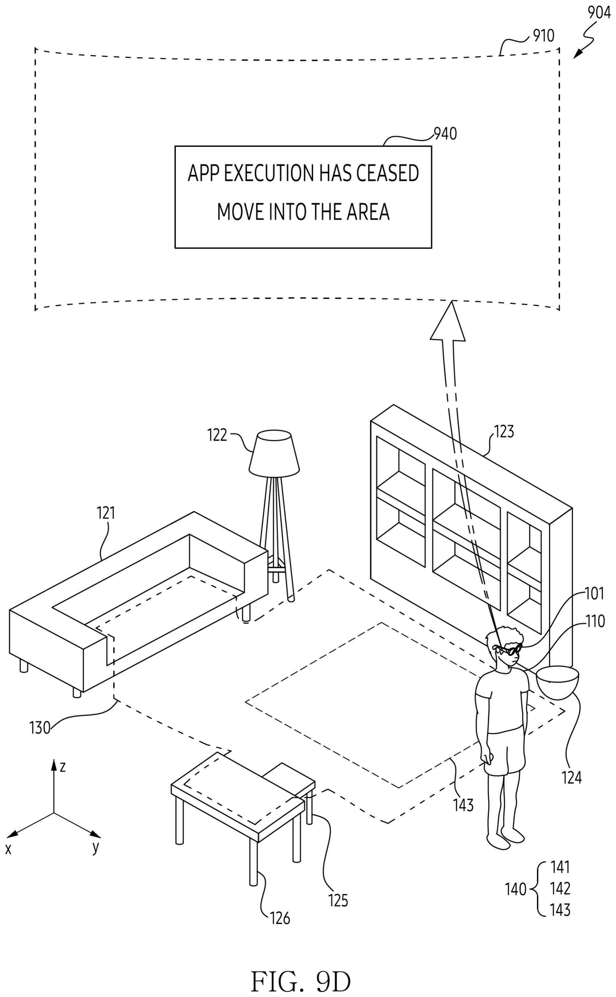

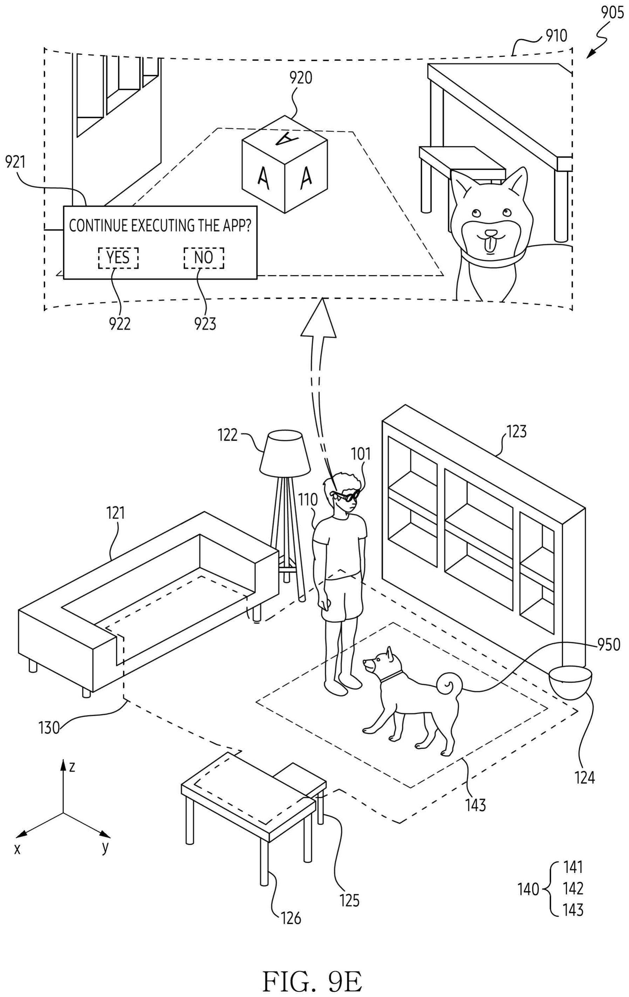

FIGS. 9A, 9B, 9C, 9D, and 9E illustrate exemplary states 901, 902, 903, 904, and 905 of a wearable device 101 that displays a screen 910 based on a position with respect to an area. The wearable device 101 of FIGS. 1 and 2 and/or the processor 210 of FIG. 2 may perform at least one of operations of FIGS. 9A to 9E. The operations of the wearable device 101 of FIGS. 9A to 9E may be associated with the operation described with reference to FIG. 3, FIG. 6, and/or FIG. 8.

Referring to FIGS. 9A to 9E, different states 901, 902, 903, 904, and 905 of the wearable device 101 executing a software application (e.g., a game application) based on a third area 143 in a region 130 are illustrated. The state 901 of FIG. 9A may be an exemplary state of the wearable device 101 performing the operation 810 of FIG. 8. In the exemplary state 901 of FIG. 9A, the wearable device 101 may display the screen 910 based on virtual reality on a display (e.g., the display 220 of FIG. 2). In the screen 910, the wearable device 101 may display a foreground object (e.g., a virtual object 920) floating in a virtual space together with a background object that fully covers an external environment.

In the state 901 associated with virtual reality, a user 110 wearing the wearable device 101 may view the screen 910 that fully covers the external environment. The wearable device 101 may maintain providing the screen 910 associated with virtual reality in the state 901 while a position of the wearable device 101 and/or the user 110, identified based on data from a camera (e.g., the camera 225 of FIG. 2) and/or a sensor (e.g., the sensor 230 of FIG. 2), is maintained in the third area 143. In the state 901 in which the screen 910 that covers the external environment is provided, the wearable device 101 may activate noise cancellation (e.g., ANC) or may activate a do not disturb mode.

In the state 901, while displaying the screen 910, the wearable device 101 may identify whether the wearable device 101 and/or the user 110 has moved out of the third area 143 by using data from the sensor and/or the camera. The third area 143 may be determined based on a category of the software application providing the screen 910.

Referring to FIG. 9B, an exemplary state 902 in which the user 110 has moved out of the third area 143 is illustrated. When switching from the state 901 of FIG. 9A to the state 902 of FIG. 9B, the processor may identify movement of the wearable device 101 out of the third area 143 based on data from the camera and/or the sensor. In the state 902 in which the position of the wearable device 101 and/or the user 110 spaced apart from the third area 143 is identified, the wearable device 101 may display a virtual object 921 for adjusting an execution state of the software application on the display. In the state 902 in which the wearable device 101 and/or the user 110 has moved out of the third area 143 and moved in the region 130, the wearable device 101 may display the virtual object 921 by performing the operation 860 of FIG. 8. For example, the virtual object 921 of FIG. 9B may be included in the virtual object of the operation 860 of FIG. 8.

Referring to FIG. 9B, the wearable device 101, having identified that the position of the wearable device 101 and/or the user 110 has moved out of the third area 143, may execute the software application, which had been executed based on virtual reality, based on augmented reality. In the state 902, the wearable device 101 may display the screen 910 based on the augmented reality. In the screen 910 in the state 902, the wearable device 101 may display the screen 910 at least partially including an image and/or a video of the external environment. For example, in the screen 910, the background object associated with the virtual reality may be removed, and the foreground object (e.g., the virtual object 920) may continue to be displayed. As described above, the wearable device 101 switching from the state 901 associated with virtual reality to the state 902 associated with augmented reality may deactivate (or temporarily pause) noise cancellation upon switching to the state 902, in a case in which the noise cancellation was activated in the state 901.

Referring to FIG. 9B, through the screen 910 based on augmented reality, the wearable device 101 may notify the user 110 of the position of the wearable device 101 and/or the user 110 that has moved out of the third area 143. In the state 902, when the user 110 moves back into the third area 143, the wearable device 101 may identify the position of the wearable device 101 and/or the user 110 that has moved into the third area 143. In response to identification of the position, the wearable device 101 may switch back from the state 902 to the state 901 of FIG. 9A (e.g., the state displaying the screen 910 that fully covers the external environment based on virtual reality). When noise cancellation was temporarily paused when switching from the state 901 to the state 902, the wearable device 101 may resume the noise cancellation upon switching back to the state 901.

In the state 902 in which the position of the wearable device 101 and/or the user 110 included in the region 130 is identified, the wearable device 101 may display the virtual object 921 for switching a state of the software application while continuing to execute the software application. In an embodiment, whether to display the virtual object 921 may be changed by a setting value inputted by the user 110. In the virtual object 921, the wearable device 101 may display text (e.g., "Continue executing the App?") for guiding the switching of the state. In the virtual object 921, the wearable device 101 may display buttons 922 and 923 for receiving an input to switch the state.

Based on an input indicating selection of the button 923, the wearable device 101 may at least temporarily cease execution of the software application. For example, in response to the input for the button 923, the wearable device 101 may cease displaying a virtual object 720 and may display, as in the state 701 of FIG. 7A, an icon (e.g., the virtual object 730 of FIG. 7A) representing the software application and having a position corresponding to the third area 143. Together with the icon, the wearable device 101 may display text, a badge, and/or an indicator indicating a state (e.g., a stage of the game application) of the software application.

Based on an input indicating selection of the button 922, the wearable device 101 may maintain execution of the software application that was being executed in the state 902. For example, in response to the input, the wearable device 101 may switch from the state 902 of FIG. 9B to the state 903 of FIG. 9C. In the state 903, the wearable device 101 may resume providing the screen 910 based on virtual reality, similar to the state 901 of FIG. 9A. In the state 903 in which the wearable device 101 has moved outside of the third area 143, the wearable device 101 providing the screen 910 based on virtual reality may adjust a boundary line of the third area 143. For example, in the state 903, the wearable device 101 may add an area 930 including the position of the wearable device 101 and/or the user 110 to the third area 143. In the state 903, the wearable device 101 may display the screen 910 based on virtual reality and/or augmented reality by comparing the third area 143 combined with the area 930 with the position of the wearable device 101 and/or the user 110.

Although the operation of the wearable device 101 changing the third area 143 based on the input indicating selection of the button 922 is described, an embodiment is not limited thereto. For example, while displaying a screen based on a game application (e.g., the screen 910 of FIG. 9a), when the number of times the wearable device 101 and/or the user 110 has moved out of the third area 143 exceeds a preset number of times, the wearable device 101 may change the third area 143 based on a movement pattern of the wearable device 101 and/or the user 110 that moves out of the third area 143. In contrast, while displaying a screen based on a game application (e.g., the screen 910 of FIG. 9A), when the wearable device 101 and/or the user 110 moves within a portion of the third area 143, the wearable device 101 may reduce a size and/or a shape of the third area 143.

After the state 903 in which the shape and/or the size of the third area 143 is changed, the wearable device 101 may change information (e.g., region information of the operation 320 of FIG. 3) indicating the changed third area 143. Based on the change (or update) of the information, the third area 143 further including the area 930 may be used for provision of the game application. For example, in the state 902 of FIG. 9B, based on the input associated with the button 922 of the virtual object 921, the wearable device 101 may change the shape and/or the size of the third area 143.

Referring to FIG. 9D, the state 904 in which the wearable device 101 and/or the user 110 has moved out of the region 130 is illustrated. Unlike the state 902 in which movement occurred in the region 130, the wearable device 101, having identified that the wearable device 101 and/or the user 110 has moved out of the region 130, may switch to the state 904 of FIG. 9D and may cease execution of the software application associated with virtual reality or augmented reality. The state 904 of FIG. 9D may be an exemplary state of the wearable device 101 that has performed the operation 850 of FIG. 8.

The wearable device 101 may display, in the screen 910, a virtual object 940 indicating cessation of execution of the software application. In the virtual object 940, the wearable device 101 may display text (e.g., "Move into the area.") for guiding movement of the wearable device 101 and/or the user 110 into the region 130 and/or the third area 143 associated with the software application. In the state 904 in which execution of the software application is ceased, the wearable device 101 may cease displaying the virtual object (e.g., the virtual object 920 and/or the background object of FIG. 9A) associated with the software application. For example, in the state 904, the wearable device 101 may not display any virtual object other than the virtual object 940. Although not illustrated, in the state 904, the user 110 wearing the wearable device 101 may view an image and/or a video corresponding to the external space through a portion in the screen 910 distinguished from the virtual object 940.

Although the operation of the wearable device 101 ceasing execution of the software application based on movement of the wearable device 101 and/or the user 110 is described, an embodiment is not limited thereto. While executing the software application based on the third area 143 in the region 130, the wearable device 101 may at least temporarily cease execution of the software application based on a change in the state in the third area 143.

Referring to FIG. 9E, the state 905 in which a dog 950 has moved into the third area 143 is illustrated. Although an operation of the wearable device 101 based on an animal such as the dog 950 is described, an embodiment is not limited thereto. For example, the wearable device 101 may perform an operation described below with reference to FIG. 9E based on an external object such as a robot vacuum cleaner and/or a person (distinguished from the user 110 wearing the wearable device 101). For example, the wearable device 101 may perform the operation described below with reference to FIG. 9E based on identifying a change in the state of the third area 143 that was identified at a timing when the third area 143 was formed based on spatial recognition.

As in the exemplary state 905 of FIG. 9E, the wearable device 101 that has identified an external object entering the third area 143 may at least temporarily cease executing the software application based on the third area 143 or may execute the software application based on augmented reality. Referring to FIG. 9E, the wearable device 101 may display the screen 910 in which the dog 950 is visible, by executing the software application based on augmented reality. In the screen 910, the wearable device 101 may display the virtual object 921 for adjusting an execution state of the software application. An operation of the wearable device 101 for the virtual object 921 of FIG. 9E may be performed similarly to the operation of the wearable device 101 described with reference to FIG. 9B and/or FIG. 9C.

Although the exemplary operation of the wearable device 101 executing a software application such as a game application in the third area 143 is described, an embodiment is not limited thereto. Hereinafter, an exemplary operation of the wearable device 101 executing a collaboration application (or a video conference application) is described with reference to FIGS. 10A to 10B.

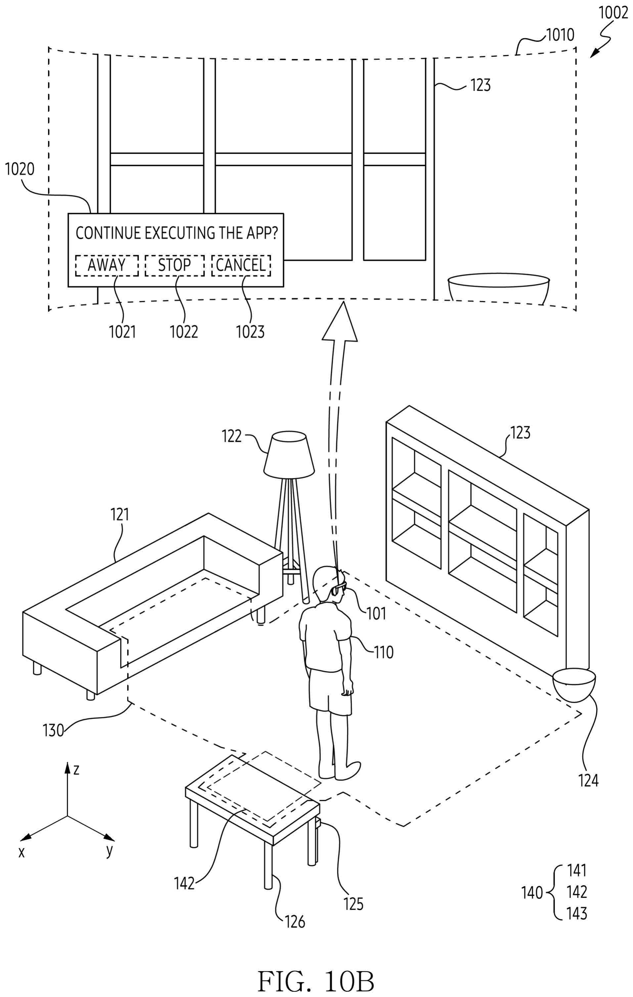

FIGS. 10A and 10B illustrate exemplary states of a wearable device 101 that displays a screen based on a position with respect to an area. The wearable device 101 of FIGS. 1 and 2 and/or the processor 210 of FIG. 2 may perform an operation of the wearable device 101 described with reference to FIG. 10A and/or FIG. 10B. The operation of the wearable device 101 of FIG. 10A and/or FIG. 10B may be associated with the operation of FIG. 3, FIG. 6, and/or FIG. 8.

Referring to FIG. 10A and/or FIG. 10B, different states 1001 and 1002 of the wearable device 101 executing a software application (e.g., a collaboration application) based on a second area 142 in a region 130 are illustrated. In the state 1001 of FIG. 10A, the wearable device 101 may display a screen 1010 associated with virtual reality based on the operation 810 of FIG. 8. In the screen 1010, the wearable device 101 may display at least a portion of a virtual space (e.g., a video conference room) provided by the collaboration application. For example, in the screen 1010, the wearable device 101 may display avatars 1011, 1012, and 1013 representing other users logged in through one or more external electronic devices. Together with a foreground object such as the avatars 1011, 1012, and 1013, the wearable device 101 may display a background object covering an external environment.

In the state 1001, the wearable device 101 may block interference from the external environment by executing noise cancellation. In the state 1001, the wearable device 101 may assist a user 110 in focusing on virtual reality for a relatively long time by adjusting brightness of a display covering two eyes of the user 110.

Referring to FIG. 10B, an exemplary state 1002 following the state 1001 of FIG. 10A is illustrated. As the user 110 wearing the wearable device 101 moves out of the second area 142, the state of the wearable device 101 may be switched from the state 1001 of FIG. 10A to the state 1002 of FIG. 10B. In the state 1002 of FIG. 10B, the wearable device 101, having identified that a position of the wearable device 101 and/or the user 110 has moved outside of the second area 142, may display a virtual object 1020 for switching an execution state of the collaboration application. In the state 1002, the wearable device 101 may cease the noise cancellation that was being executed based on the collaboration application. In the state 1002, the wearable device 101 may cease displaying the screen (e.g., the screen 1010 of FIG. 10A) based on virtual reality and may display an image and/or a video of the external environment based on augmented reality and/or VST. Based on the image and/or the video, the user 110 of the wearable device 101 may view a real object (e.g., an external object 123 such as a bookshelf) in an external space.

In the state 1002 of FIG. 10B switched from the state 1001 of FIG. 10A, the wearable device 101 may cease or may maintain an execution state of the collaboration application. When maintaining execution of the collaboration application, the wearable device 101 may maintain outputting audio corresponding to the virtual space (e.g., the video conference room) provided by the collaboration application to the user 110 through a speaker. For example, in the state 1002, the user 110 may hear, through the wearable device 101, utterances of other users (e.g., users corresponding to the avatars 1011, 1012, and 1013) logged in to the virtual space.

Referring to FIG. 10B, in the screen 1010, the wearable device 101 may display the virtual object 1020 including buttons 1021, 1022, and 1023 for adjusting a state of the collaboration application. Although the virtual object 1020 having a shape of a dialog box is exemplarily illustrated, an embodiment is not limited thereto. In the virtual object 1020, the wearable device 101 may display the button 1021 for adjusting a state (e.g., an away state) of the user 110 in the virtual space (e.g., the video conference room) that was being provided by the collaboration application. In response to an input indicating selection of the button 1021, the wearable device 101 may change a state of the user 110 to a state associated with the button 1021 based on execution of the collaboration application.

Referring to FIG. 10B, in the virtual object 1020, the wearable device 101 may display the button 1022 for at least temporarily ceasing execution of the collaboration application. The button 1022 may include preset text (e.g., "Stop") guiding cessation of the collaboration application. In response to an input associated with the button 1022, the wearable device 101 may cease execution of the collaboration application. Referring to FIG. 10B, in the virtual object 1020, the wearable device 101 may display the button 1023 for adjusting visibility of the virtual object 1020. Although the button 1023 including text such as "Cancel" is illustrated, an embodiment is not limited thereto. In response to an input for the button 1023, the wearable device 101 may cease displaying the virtual object 1020 in the screen 1010.

Hereinafter, an exemplary exterior of the wearable device described with reference to FIG. 1 to FIG. 10B is illustrated with reference to FIG. 11A, FIG. 11B, FIG. 12A and/or FIG. 12B. The wearable device 1100 of FIG. 11A and/or FIG. 11B and/or the wearable device 1200 of FIG. 12A and/or FIG. 12B may be an example of the wearable device 101 of FIG. 1.

FIG. 11A illustrates an example of a perspective view of a wearable device according to an embodiment. According to an embodiment, a wearable device 1100 may have a form of glasses that is wearable on a body part (e.g., head) of a user. The wearable device 1100 may include a head-mounted display (HMD). For example, a housing of the wearable device 1100 may include a flexible material such as rubber and/or silicone having a form closely attached to a portion of the user's head (for example, a portion of a face surrounding two eyes). For example, the housing of the wearable device 1100 may include one or more straps able to be twined around the user's head, and/or one or more temples attachable to ears of the head.

Referring to FIG. 11A, according to an embodiment, the wearable device 1100 may include at least one display 1150 and a frame 1100 supporting the at least one display 1150.

According to an embodiment, the wearable device 1100 may be wearable on a portion of the user's body. The wearable device 1100 may provide augmented reality (AR), virtual reality (VR), or mixed reality (MR) combining the augmented reality and the virtual reality to a user wearing the wearable device 1100. For example, the wearable device 1100 may display a virtual reality image provided from at least one optical device 1182 and 1184 of FIG. 11B on at least one display 1150, in response to a user's preset gesture obtained through a motion recognition camera 1160-2 and 1160-3 of FIG. 11B.

According to an embodiment, the at least one display 1150 may provide visual information to a user. For example, the at least one display 1150 may include a transparent or translucent lens. The at least one display 1150 may include a first display 1150-1 and/or a second display 1150-2 spaced apart from the first display 1150-1. For example, the first display 1150-1 and the second display 1150-2 may be disposed at positions corresponding to the user's left and right eyes, respectively.

Referring to FIG. 11B, the at least one display 1150 may provide visual information transmitted through a lens included in the at least one display 1150 from ambient light to a user and other visual information distinguished from the visual information11. The lens may be formed based on at least one of a fresnel lens, a pancake lens, or a multi-channel lens. For example, the at least one display 1150 may include a first surface 1131 and a second surface 1132 opposite to the first surface 1131. A display area may be formed on the second surface 1132 of at least one display 1150. When the user wears the wearable device 1100, ambient light may be transmitted to the user by being incident on the first surface 1131 and being penetrated through the second surface 1132. For another example, the at least one display 1150 may display an augmented reality image in which a virtual reality image provided by the at least one optical device 1182 and 1184 is combined with a reality screen transmitted through ambient light, on a display area formed on the second surface 1132.

According to an embodiment, the at least one display 1150 may include at least one waveguide 1133 and 1134 that transmits light transmitted from the at least one optical device 1182 and 1184 by diffracting to the user. The at least one waveguide 1133 and 1134 may be formed based on at least one of glass, plastic, or polymer. A nano pattern may be formed on at least a portion of the outside or inside of the at least one waveguide 1133 and 1134. The nano pattern may be formed based on a grating structure having a polygonal or curved shape. Light incident to an end of the at least one waveguide 1133 and 1134 may be propagated to another end of the at least one waveguide 1133 and 1134 by the nano pattern. The at least one waveguide 1133 and 1134 may include at least one of at least one diffraction element (e.g., a diffractive optical element (DOE), a holographic optical element (HOE)), and a reflection element (e.g., a reflection mirror). For example, the at least one waveguide 1133 and 1134 may be disposed in the wearable device 1100 to guide a screen displayed by the at least one display 1150 to the user's eyes. For example, the screen may be transmitted to the user's eyes based on total internal reflection (TIR) generated in the at least one waveguide 1133 and 1134.

The wearable device 1100 may analyze an object included in a real image collected through a photographing camera 1160-4, combine with a virtual object corresponding to an object that becomes a subject of augmented reality provision among the analyzed object, and display on the at least one display 1150. The virtual object may include at least one of text and images for various information associated with the object included in the real image. The wearable device 1100 may analyze the object based on a multi-camera such as a stereo camera. For the object analysis, the wearable device 1100 may execute space recognition (e.g., simultaneous localization and mapping (SLAM)) using the multi-camera and/or time-of-flight (ToF) . The user wearing the wearable device 1100 may watch an image displayed on the at least one display 1150.

According to an embodiment, a frame 1100 may be configured with a physical structure in which the wearable device 1100 may be worn on the user's body. According to an embodiment, the frame 1100 may be configured so that when the user wears the wearable device 1100, the first display 1150-1 and the second display 1150-2 may be positioned corresponding to the user's left and right eyes. The frame 1100 may support the at least one display 1150. For example, the frame 1100 may support the first display 1150-1 and the second display 1150-2 to be positioned at positions corresponding to the user's left and right eyes.

Referring to FIG. 11A, according to an embodiment, the frame 1100 may include an area 1120 at least partially in contact with the portion of the user's body in case that the user wears the wearable device 1100. For example, the area 1120 of the frame 1100 in contact with the portion of the user's body may include an area in contact with a portion of the user's nose, a portion of the user's ear, and a portion of the side of the user's face that the wearable device 1100 contacts. According to an embodiment, the frame 1100 may include a nose pad 1110 that is contacted on the portion of the user's body. When the wearable device 1100 is worn by the user, the nose pad 1110 may be contacted on the portion of the user's nose. The frame 1100 may include a first temple 1104 and a second temple 1105, which are contacted on another portion of the user's body that is distinct from the portion of the user's body.

For example, the frame 1100 may include a first rim 1101 surrounding at least a portion of the first display 1150-1, a second rim 1102 surrounding at least a portion of the second display 1150-2, a bridge 1103 disposed between the first rim 1101 and the second rim 1102, a first pad 1111 disposed along a portion of the edge of the first rim 1101 from one end of the bridge 1103, a second pad 1112 disposed along a portion of the edge of the second rim 1102 from the other end of the bridge 1103, the first temple 1104 extending from the first rim 1101 and fixed to a portion of the wearer's ear, and the second temple 1105 extending from the second rim 1102 and fixed to a portion of the ear opposite to the ear. The first pad 1111 and the second pad 1112 may be in contact with the portion of the user's nose, and the first temple 1104 and the second temple 1105 may be in contact with a portion of the user's face and the portion of the user's ear. The temples 1104 and 1105 may be rotatably connected to the rim through hinge units 1106 and 1107 of FIG. 11B. The first temple 1104 may be rotatably connected with respect to the first rim 1101 through the first hinge unit 1106 disposed between the first rim 1101 and the first temple 1104. The second temple 1105 may be rotatably connected with respect to the second rim 1102 through the second hinge unit 1107 disposed between the second rim 1102 and the second temple 1105. According to an embodiment, the wearable device 1100 may identify an external object (e.g., a user's fingertip) touching the frame 1100 and/or a gesture performed by the external object by using a touch sensor, a grip sensor, and/or a proximity sensor formed on at least a portion of the surface of the frame 1100.

According to an embodiment, the wearable device 1100 may include hardware (e.g., hardware described above based on the block diagram of FIG. 2) that performs various functions. For example, the hardware may include a battery module 1170, an antenna module 1175, the at least one optical device 1182 and 1184, speakers (e.g., speakers 1155-1 and 1155-2), a microphone (e.g., microphones 1165-1, 1165-2, and 1165-3), a light emitting module, and/or a printed circuit board (PCB) 1190 (e.g., printed circuit board). Various hardware components may be disposed in the frame 1100.

According to an embodiment, the microphone (e.g., the microphones 1165-1, 1165-2, and 1165-3) of the wearable device 1100 may obtain a sound signal, by being disposed on at least a portion of the frame 1100. The first microphone 1165-1 disposed on the bridge 1103, the second microphone 1165-2 disposed on the second rim 1102, and the third microphone 1165-3 disposed on the first rim 1101 are illustrated in FIG. 11B, but the number and disposition of the microphone 1165 are not limited to an embodiment of FIG. 11B. In case that the number of the microphone 1165 included in the wearable device 1100 is two or more, the wearable device 1100 may identify a direction of the sound signal by using a plurality of microphones disposed on different portions of the frame 1100.

According to an embodiment, the at least one optical device 1182 and 1184 may project a virtual object on the at least one display 1150 in order to provide various image information to the user. For example, the at least one optical device 1182 and 1184 may be a projector. The at least one optical device 1182 and 1184 may be disposed adjacent to the at least one display 1150 or may be included in the at least one display 1150 as a portion of the at least one display 1150. According to an embodiment, the wearable device 1100 may include a first optical device 1182 corresponding to the first display 1150-1, and a second optical device 1184 corresponding to the second display 1150-2. For example, the at least one optical device 1182 and 1184 may include the first optical device 1182 disposed at a periphery of the first display 1150-1 and the second optical device 1184 disposed at a periphery of the second display 1150-2. The first optical device 1182 may transmit light to the first waveguide 1133 disposed on the first display 1150-1, and the second optical device 1184 may transmit light to the second waveguide 1134 disposed on the second display 1150-2.

In an embodiment, a camera 1160 may include the photographing camera 1160-4, an eye tracking camera (ET CAM) 1160-1, and/or the motion recognition camera 1160-2 and 1160-3. The photographing camera 1160-4, the eye tracking camera 1160-1, and the motion recognition camera 1160-2 and 1160-3 may be disposed at different positions on the frame 1100 and may perform different functions. The eye tracking camera 1160-1 may output data indicating a position of eye or a gaze of the user wearing the wearable device 1100. For example, the wearable device 1100 may detect the gaze from an image including the user's pupil obtained through the eye tracking camera 1160-1.

The wearable device 1100 may identify an object (e.g., a real object, and/or a virtual object) focused by the user, by using the user's gaze obtained through the eye tracking camera 1160-1. The wearable device 1100 identifying the focused object may execute a function (e.g., gaze interaction) for interaction between the user and the focused object. The wearable device 1100 may represent a portion corresponding to eye of an avatar indicating the user in the virtual space, by using the user's gaze obtained through the eye tracking camera 1160-1. The wearable device 1100 may render an image (or a screen) displayed on the at least one display 1150, based on the position of the user's eye.

For example, visual quality (e.g., resolution, brightness, saturation, grayscale, and pixels per inch (PPI)) of a first area related to the gaze within the image and visual quality of a second area distinguished from the first area may be different. The wearable device 1100 may obtain an image having the visual quality of the first area matching the user's gaze and the visual quality of the second area by using foveated rendering. For example, when the wearable device 1100 supports an iris recognition function, user authentication may be performed based on iris information obtained using the eye tracking camera 1160-1. An example in which the eye tracking camera 1160-1 is disposed toward the user's right eye is illustrated in FIG. 11B, but the embodiment is not limited thereto, and the eye tracking camera 1160-1 may be disposed alone toward the user's left eye or may be disposed toward two eyes.

In an embodiment, the photographing camera 1160-4 may photograph a real image or background to be matched with a virtual image in order to implement the augmented reality or mixed reality content. The photographing camera 1160-4 may be used to obtain an image having a high resolution based on a high resolution (HR) or a photo video (PV). The photographing camera 1160-4 may photograph an image of a specific object existing at a position viewed by the user and may provide the image to the at least one display 1150. The at least one display 1150 may display one image in which a virtual image provided through the at least one optical device 1182 and 1184 is overlapped with information on the real image or background including an image of the specific object obtained by using the photographing camera 1160-4. The wearable device 1100 may compensate for depth information (e.g., a distance between the wearable device 1100 and an external object obtained through a depth sensor), by using an image obtained through the photographing camera 1160-4. The wearable device 1100 may perform object recognition through an image obtained using the photographing camera 1160-4. The wearable device 1100 may perform a function (e.g., auto focus) of focusing an object (or subject) within an image and/or an optical image stabilization (OIS) function (e.g., an anti-shaking function) by using the photographing camera 1160-4. While displaying a screen representing a virtual space on the at least one display 1150, the wearable device 1100 may perform a pass through function for displaying an image obtained through the photographing camera 1160-4 overlapping at least a portion of the screen. In an embodiment, the photographing camera 1160-4 may be disposed on the bridge 1103 disposed between the first rim 1101 and the second rim 1102.

The eye tracking camera 1160-1 may implement a more realistic augmented reality by matching the user's gaze with the visual information provided on the at least one display 1150, by tracking the gaze of the user wearing the wearable device 1100. For example, when the user looks at the front, the wearable device 1100 may naturally display environment information associated with the user's front on the at least one display 1150 at a position where the user is positioned. The eye tracking camera 1160-1 may be configured to capture an image of the user's pupil in order to determine the user's gaze. For example, the eye tracking camera 1160-1 may receive gaze detection light reflected from the user's pupil and may track the user's gaze based on the position and movement of the received gaze detection light. In an embodiment, the eye tracking camera 1160-1 may be disposed at a position corresponding to the user's left and right eyes. For example, the eye tracking camera 1160-1 may be disposed in the first rim 1101 and/or the second rim 1102 to face the direction in which the user wearing the wearable device 1100 is positioned.

The motion recognition camera 1160-2 and 1160-3 may provide a specific event to the screen provided on the at least one display 1150 by recognizing the movement of the whole or portion of the user's body, such as the user's torso, hand, or face. The motion recognition camera 1160-2 and 1160-3 may obtain a signal corresponding to motion by recognizing the user's motion (e.g., gesture recognition), and may provide a display corresponding to the signal to the at least one display 1150. The processor may identify a signal corresponding to the operation and may perform a preset function based on the identification. The motion recognition camera 1160-2 and 1160-3 may be used to perform SLAM for 6 degrees of freedom pose (6 dof pose) and/or a space recognition function using a depth map. The processor may perform a gesture recognition function and/or an object tracking function, by using the motion recognition camera 1160-2 and 1160-3. In an embodiment, the motion recognition camera 1160-2 and camera 1160-3 may be disposed on the first rim 1101 and/or the second rim 1102.

The camera 1160 included in the wearable device 1100 is not limited to the above-described eye tracking camera 1160-1 and the motion recognition camera 1160-2 and 1160-3. For example, the wearable device 1100 may identify an external object included in the FoV by using a camera disposed toward the user's FoV. The wearable device 1100 identifying the external object may be performed based on a sensor for identifying a distance between the wearable device 1100 and the external object, such as a depth sensor and/or a time of flight (ToF) sensor. The camera 1160 disposed toward the FoV may support an autofocus function and/or an optical image stabilization (OIS) function. For example, in order to obtain an image including a face of the user wearing the wearable device 1100, the wearable device 1100 may include the camera 1160 (e.g., a face tracking (FT) camera) disposed toward the face.

Although not illustrated, the wearable device 1100 according to an embodiment may further include a light source (e.g., LED) that emits light toward a subject (e.g., user's eyes, face, and/or an external object in the FoV) photographed by using the camera 1160. The light source may include an LED having an infrared wavelength. The light source may be disposed on at least one of the frame 1100, and the hinge units 1106 and 1107.

According to an embodiment, the battery module 1170 may supply power to electronic components of the wearable device 1100. In an embodiment, the battery module 1170 may be disposed in the first temple 1104 and/or the second temple 1105. For example, the battery module 1170 may be a plurality of battery modules 1170. The plurality of battery modules 1170, respectively, may be disposed on each of the first temple 1104 and the second temple 1105. In an embodiment, the battery module 1170 may be disposed at an end of the first temple 1104 and/or the second temple 1105.

The antenna module 1175 may transmit the signal or power to the outside of the wearable device 1100 or may receive the signal or power from the outside. In an embodiment, the antenna module 1175 may be disposed in the first temple 1104 and/or the second temple 1105. For example, the antenna module 1175 may be disposed close to one surface of the first temple 1104 and/or the second temple 1105.

The speaker 1155 may output a sound signal to the outside of the wearable device 1100. A sound output module may be referred to as a speaker. In an embodiment, the speaker 1155 may be disposed in the first temple 1104 and/or the second temple 1105 in order to be disposed adjacent to the ear of the user wearing the wearable device 1100. For example, the speaker 1155 may include a second speaker 1155-2 disposed adjacent to the user's left ear by being disposed in the first temple 1104, and a first speaker 1155-1 disposed adjacent to the user's right ear by being disposed in the second temple 1105.

The light emitting module (not illustrated) may include at least one light emitting element. The light emitting module may emit light of a color corresponding to a specific state or may emit light through an operation corresponding to the specific state in order to visually provide information on a specific state of the wearable device 1100 to the user. For example, when the wearable device 1100 requires charging, it may emit red light at a constant cycle. In an embodiment, the light emitting module may be disposed on the first rim 1101 and/or the second rim 1102.

Referring to FIG. 11B, according to an embodiment, the wearable device 1100 may include the printed circuit board (PCB) 1190. The PCB 1190 may be included in at least one of the first temple 1104 or the second temple 1105. The PCB 1190 may include an interposer disposed between at least two sub PCBs. On the PCB 1190, one or more hardware (e.g., hardware illustrated by different blocks of FIG. 2) included in the wearable device 1100 may be disposed. The wearable device 1100 may include a flexible PCB (FPCB) for interconnecting the hardware.

According to an embodiment, the wearable device 1100 may include at least one of a gyro sensor, a gravity sensor, and/or an acceleration sensor for detecting the posture of the wearable device 1100 and/or the posture of a body part (e.g., a head) of the user wearing the wearable device 1100. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 1100 may identify the user's motion and/or gesture performed to execute or stop a specific function of the wearable device 1100 based on the IMU.

FIGS. 12A to 12B illustrate an example of an exterior of a wearable device according to an embodiment. A wearable device 1200 of FIGS. 12A to 12B may include at least a portion of hardware of the wearable device 1100 described with reference to FIGS. 11A and/or 11B. According to an embodiment, an example of an exterior of a first surface 1210 of a housing of the wearable device 1200 may be illustrated in FIG. 12A, and an example of an exterior of a second surface 1220 opposite to the first surface 1210 may be illustrated in FIG. 12B.

Referring to FIG. 12A, according to an embodiment, the first surface 1210 of the wearable device 1200 may have an attachable shape on the user's body part (e.g., the user's face). Although not illustrated, the wearable device 1200 may further include a strap for being fixed on the user's body part, and/or one or more temples (e.g., the first temple 1104 and/or the second temple 1105 of FIGS. 11A to 11B). A first display 1150-1 for outputting an image to the left eye among the user's two eyes and a second display 1150-2 for outputting an image to the right eye among the user's two eyes may be disposed on the first surface 1210. The wearable device 1200 may further include rubber or silicon packing, which are formed on the first surface 1210, for preventing interference by light (e.g., ambient light) different from the light emitted from the first display 1150-1 and the second display 1150-2.

According to an embodiment, the wearable device 1200 may include a camera 1160-1 for photographing and/or tracking two eyes of the user adjacent to each of the first display 1150-1 and the second display 1150-2. The camera 1160-1 may be referred to as the gaze tracking camera 1160-1 of FIG. 11B. According to an embodiment, the wearable device 1200 may include cameras 1160-5 and 1160-6 for photographing and/or recognizing the user's face. The cameras 1160-5 and 1160-6 may be referred to as a FT camera. The wearable device 1200 may control an avatar representing a user in a virtual space, based on a motion of the user's face identified using the cameras 1160-5 and 1160-6. For example, the wearable device 1200 may change a texture and/or a shape of a portion (e.g., a portion of an avatar representing a human face) of the avatar, by using information obtained by the cameras 1160-5 and 1160-6 (e.g., the FT camera) and representing the facial expression of the user wearing the wearable device 1200.

Referring to FIG. 12B, a camera (e.g., cameras 1160-7, 1160-8, 1160-9, 1160-10, 1160-11, and 1160-12), and/or a sensor (e.g., the depth sensor 1230) for obtaining information associated with the external environment of the wearable device 1200 may be disposed on the second surface 1220 opposite to the first surface 1210 of FIG. 12A. For example, the cameras 1160-7, 1160-8, 1160-9, and 1160-10 may be disposed on the second surface 1220 in order to recognize an external object. The cameras 1160-7, 1160-8, 1160-9, and 1160-10 of FIG. 12B may correspond to as the motion recognition cameras 1160-2 and 1160-3 of FIG. 11B.

For example, by using cameras 1160-11 and 1160-12, the wearable device 1200 may obtain an image and/or video to be transmitted to each of the user's two eyes. The camera 1160-11 may be disposed on the second surface 1220 of the wearable device 1200 to obtain an image to be displayed through the second display 1150-2 corresponding to the right eye among the two eyes. The camera 1160-12 may be disposed on the second surface 1220 of the wearable device 1200 to obtain an image to be displayed through the first display 1150-1 corresponding to the left eye among the two eyes. The cameras 1160-11 and 1160-12 may correspond to as the photographing camera 1160-4 of FIG. 11B.

According to an embodiment, the wearable device 1200 may include the depth sensor 1230 disposed on the second surface 1220 in order to identify a distance between the wearable device 1200 and the external object. By using the depth sensor 1230, the wearable device 1200 may obtain spatial information (e.g., a depth map) about at least a portion of the FoV of the user wearing the wearable device 1200. Although not illustrated, a microphone for obtaining sound outputted from the external object may be disposed on the second surface 1220 of the wearable device 1200. The number of microphones may be one or more according to embodiments.

In an embodiment, a method for controlling execution of a software application may be required based on a position of a wearable device identified in an external space. As described above, a wearable device (e.g., the wearable device 101 of FIG. 1, the wearable device 1100 of FIGS. 11A and/or 11B, or the wearable device 1200 of FIGS. 12A and/or 12B) according to an embodiment may comprise one or more sensors (e.g., the sensor 230 of FIG. 2), a display (e.g., the display 220 of FIG. 2), memory (e.g., the memory 215 of FIG. 2) including one or more storage media storing instructions, and at least one processor (e.g., the processor 210 of FIG. 2) including processing circuitry. The instructions, when executed by the at least one processor individually or collectively, may cause the wearable device to define a region including a plurality of areas based on a scanning of a physical space. The instructions, when executed by the at least one processor individually or collectively, may cause the wearable device to identify, based on sensor data obtained from the one or more sensors, a position of the wearable device with respect to the region. The instructions, when executed by the at least one processor individually or collectively, may cause the wearable device to, based on identifying that the position of the wearable device is included in a first area among the plurality of areas included in the region, display, by executing a software application associated with the first area, a screen provided by the software application on the display to provide a virtual reality. According to an embodiment, the wearable device may improve a user experience associated with virtual reality and/or augmented reality based on areas dividing the region.

For example, the memory may store the instructions which, when executed by the at least one processor individually or collectively, cause the wearable device to identify, based on sensor data, that the position of the wearable device is moved outside of the first area. The memory may store the instructions which, when executed by the at least one processor individually or collectively, cause the wearable device to, based on identifying that the position of the wearable device is moved outside of the first area, provide an augmented reality. The memory may store the instructions which, when executed by the at least one processor individually or collectively, cause the wearable device to, based on a field-of-view (FoV) of the wearable device corresponding to the first area while providing the augmented reality, display a virtual object representing the software application associated with the first area together with a camera image.

For example, the memory may store the instructions which, when executed by the at least one processor individually or collectively, cause the wearable device to display, on the camera image displayed based on the augmented reality, another virtual object indicating a border line of the first area.

For example, the memory may store the instructions which, when executed by the at least one processor individually or collectively, cause the wearable device to display the another virtual object in response to detecting a portion corresponding to a floor included in the first area in the camera image.

For example, the memory may store the instructions which, when executed by the at least one processor individually or collectively, cause the wearable device to identify, using the sensor data, whether the wearable device is moved outside of the first area while displaying the screen.

For example, the memory may store the instructions which, when executed by the at least one processor individually or collectively, cause the wearable device to, based on identifying the position of the wearable device spaced apart from the first area while displaying the screen, adjust the border line of the first area on the display.

For example, the memory may store the instructions which, when executed by the at least one processor individually or collectively, cause the wearable device to, based on identifying the position of the wearable device spaced apart from the first area while displaying the screen, display another virtual object (e.g., the virtual object 921 of FIG. 9B) for identifying whether to cease execution of the software application corresponding to the screen on the display.

For example, the memory may store the instructions which, when executed by the at least one processor individually or collectively, cause the wearable device to, in response to another input indicating cessation of execution of the software application, display an icon corresponding to the software application on a portion of the display associated with the first area.

For example, the memory may store the instructions which, when executed by the at least one processor individually or collectively, cause the wearable device to, based on identifying the position of the wearable device spaced apart from the first area while displaying the screen based on virtual reality, display another screen including an image of an external space based on augmented reality and at least one virtual object included in the virtual reality on the display.

For example, the memory may store the instructions which, when executed by the at least one processor individually or collectively, cause the wearable device to identify, based on categories of each of a plurality of software applications stored in the memory of the wearable device and sizes of the plurality of areas, one or more software applications associated with the first area.

As described above, a method of a wearable device according to an embodiment may comprise defining a region including a plurality of areas based on a scanning of a physical space. The method may comprise identifying, based on sensor data obtained from one or more sensors of the wearable device, a position of the wearable device with respect to the region. The method may comprise, based on identifying that the position of the wearable device is included in a first area among the plurality of areas included in the region, displaying, by executing a software application associated with the first area, a screen provided by the software application on a display of the wearable device to provide a virtual reality.

For example, the displaying the screen may comprise identifying, based on sensor data, that the position of the wearable device is moved outside of the first area. The displaying the screen may comprise, based on identifying that the position of the wearable device is moved outside of the first area, providing an augmented reality. The displaying the screen may comprise, based on a field-of-view (FoV) of the wearable device corresponding to the first area while providing the augmented reality, displaying a virtual object representing the software application associated with the first area together with a camera image.

For example, the providing the augmented reality may comprise displaying, on the camera image displayed based on the augmented reality, another virtual object indicating a border line of the first area.

For example, the method may comprise, based on identifying the position of the wearable device spaced apart from the first area, displaying another virtual object for identifying whether to cease execution of the software application corresponding to the screen on the display.

For example, the displaying the other virtual object may comprise, in response to another input indicating cessation of execution of the software application, displaying an icon corresponding to the software application on a portion of the display associated with the first area.

For example, the method may further comprise, based on identifying the position of the wearable device spaced apart from the first area, displaying another screen including an image of an external space based on augmented reality and at least one virtual object included in the virtual reality on the display.

For example, the displaying the one or more virtual objects may comprise, identifying, based on categories of each of a plurality of software applications stored in memory of the wearable device and sizes of the plurality of areas, one or more software applications associated with the first area.

As described above, a wearable device (e.g., the wearable device 101 of FIG. 1, the wearable device 1100 of FIGS. 11A and/or 11B, or the wearable device 1200 of FIGS. 12A and/or 12B) according to an embodiment may comprise one or more sensors (e.g., the sensor 230 of FIG. 2), a display (e.g., the display 220 of FIG. 2), memory (e.g., the memory 215 of FIG. 2) for storing instructions, and at least one processor (e.g., the processor 210 of FIG. 2) for executing the instructions. The at least one processor may be configured to, in response to an input associated with execution of a first software application among a plurality of software applications, identify, based on sensor data associated with an external space obtained from the one or more sensors, a plurality of areas (e.g., the areas 140 of FIG. 1) corresponding to at least one of the plurality of software applications and a region (e.g., the region 130 of FIGS. 1, 4, 5, 7A, 7B, 9A, 9B, 9C, 9D, 9E, 10A, and/or 10B) including the plurality of areas. The at least one processor may be configured to display, based on identifying a position of the wearable device included in a first area corresponding to the first software application among the plurality of areas, a first screen provided by the first software application on the display. The at least one processor may be configured to, based on identifying the position of the wearable device spaced apart from the first area, display a second screen for guiding a movement toward the first area.

For example, the at least one processor may be configured to display the second screen including a virtual object overlapped on a portion of the display associated with the first area.

For example, the at least one processor may be configured to display the virtual object having a shape representing a border line of the first area.

For example, the at least one processor may be configured to, based on identifying the position of the wearable device spaced apart from the first area while displaying the first screen, display a virtual object for receiving another input for ceasing execution of the first software application.

As described above, a method of a wearable device according to an embodiment may comprise, in response to an input associated with execution of a first software application among a plurality of software applications, identifying, based on sensor data associated with an external space obtained from one or more sensors of the wearable device, a plurality of areas corresponding to at least one of the plurality of software applications and a region including the plurality of areas. The method may comprise displaying, based on identifying a position of the wearable device included in a first area corresponding to the first software application among the plurality of areas, a first screen provided by the first software application on a display of the wearable device. The method may comprise, based on identifying the position of the wearable device spaced apart from the first area, displaying a second screen for guiding a movement toward the first area.

For example, the displaying the second screen may comprise displaying the second screen including a virtual object overlapped on a portion of the display associated with the first area.

For example, the displaying the second screen may comprise displaying the virtual object having a shape representing a border line of the first area.

For example, the displaying the first screen may comprise, based on identifying the position of the wearable device spaced apart from the first area while displaying the first screen, displaying a virtual object for receiving another input for ceasing execution of the first software application.

As described above, a wearable device (e.g., the wearable device 101 of FIG. 1, the wearable device 1100 of FIGS. 11A and/or 11B, or the wearable device 1200 of FIGS. 12A and/or 12B) according to an embodiment may comprise one or more sensors (e.g., the sensor 230 of FIG. 2), a display (e.g., the display 220 of FIG. 2), memory (e.g., the memory 215 of FIG. 2) for storing instructions, and at least one processor (e.g., the processor 210 of FIG. 2) for executing the instructions. The at least one processor may be configured to obtain sensor data associated with a position of the wearable device from the one or more sensors while displaying a first screen associated with virtual reality or augmented reality. The at least one processor may be configured to display, based on identifying, by using the sensor data, a position of the wearable device spaced apart from a first area corresponding to the first screen and positioned in a region (e.g., the region 130 of FIGS. 1, 4, 5, 7A, 7B, 9A, 9B, 9C, 9D, 9E, 10A, and/or 10B) that includes a plurality of areas (e.g., the areas 140 of FIG. 1) including the first area, a virtual object on the display for adjusting a size of the first area in the region. The at least one processor may be configured to cease displaying the first screen on the display, based on identifying a position of the wearable device spaced apart from the region by using the sensor data.

For example, the at least one processor may be configured to display another virtual object on the display for ceasing execution of a software application corresponding to the first screen, based on identifying the position of the wearable device spaced apart from the first area and positioned in the region.

For example, the at least one processor may be configured to display another virtual object representing the software application corresponding to the first screen on a portion of the display linked to the first area, based on identifying the position of the wearable device spaced apart from the region.

As described above, a method of a wearable device according to an embodiment may comprise obtaining sensor data associated with a position of the wearable device from one or more sensors of the wearable device while displaying a first screen associated with virtual reality or augmented reality. The method may comprise displaying, based on identifying, by using the sensor data, a position of the wearable device spaced apart from a first area corresponding to the first screen and positioned in a region that includes a plurality of areas including the first area, a virtual object on a display of the wearable device for adjusting a size of the first area in the region. The method may comprise ceasing to display the first screen on the display, based on identifying a position of the wearable device spaced apart from the region by using the sensor data.

For example, the displaying the virtual object may comprise displaying another virtual object for ceasing execution of a software application corresponding to the first screen.

For example, the ceasing may comprise displaying another virtual object representing the software application corresponding to the first screen on a portion of the display linked to the first area.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

Although the embodiments have been described above with reference to limited examples and drawings, various modifications and variations may be made from the above description by those skilled in the art. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

## Claims

1. A wearable device(101; 1100; 1200) comprising:
one or more sensors(230);
a display(220);
memory(215) including one or more storage media storing instructions; and
at least one processor including processing circuitry, wherein the instructions, when executed by the at least one processor individually or collectively, cause the wearable device to:
define a region including a plurality of areas based on a scanning of a physical space;
identify, based on sensor data obtained from the one or more sensors, a position of the wearable device with respect to the region; and
based on identifying that the position of the wearable device is included in a first area among the plurality of areas included in the region, display, by executing a software application associated with the first area, a screen provided by the software application on the display to provide a virtual reality.

2. The wearable device of claim 1, wherein the instructions, when executed by the at least one processor individually or collectively, cause the wearable device to:
identify, based on sensor data, that the position of the wearable device is moved outside of the first area;
based on identifying that the position of the wearable device is moved outside of the first area, provide an augmented reality; and
based on a field-of-view (FoV) of the wearable device corresponding to the first area while providing the augmented reality, display a virtual object representing the software application associated with the first area together with a camera image.

3. The wearable device of claim 2, wherein the instructions, when executed by the at least one processor individually or collectively, cause the wearable device to:
display, on the camera image displayed based on the augmented reality, another virtual object indicating a border line of the first area.

4. The wearable device of claim 3, wherein the instructions, when executed by the at least one processor individually or collectively, cause the wearable device to:
in response to identifying a portion corresponding to a floor included in the first area in the camera image, display the another virtual object.

5. The wearable device of claim 1 to claim 4, wherein the instructions, when executed by the at least one processor individually or collectively, cause the wearable device to:
based on identifying the position of the wearable device spaced apart from the first area while displaying the screen, adjust the border line of the first area.

6. The wearable device of claim 1 to claim 5, wherein the instructions, when executed by the at least one processor individually or collectively, cause the wearable device to:
based on identifying the position of the wearable device spaced apart from the first area while displaying the screen, display another virtual object(921) for identifying whether to cease execution of the software application corresponding to the screen on the display.

7. The wearable device of claim 1 to claim 6, wherein the instructions, when executed by the at least one processor individually or collectively, cause the wearable device to:
in response to another input indicating cessation of execution of the software application, display an icon corresponding to the software application on a portion of the display associated with the first area.

8. The wearable device of claim 1 to claim 7, wherein the instructions, when executed by the at least one processor individually or collectively, cause the wearable device to:
identify, based on categories of each of a plurality of software applications stored in the memory of the wearable device and sizes of the plurality of areas, one or more software applications associated with the first area.

9. A method of a wearable device, comprising:
defining a region including a plurality of areas based on a scanning of a physical space;
identifying, based on sensor data obtained from one or more sensors of the wearable device, a position of the wearable device with respect to the region; and
based on identifying that the position of the wearable device is included in a first area among the plurality of areas included in the region, displaying, by executing a software application associated with the first area, a screen provided by the software application on a display of the wearable device to provide a virtual reality.

10. The method of claim 9, wherein the displaying the screen comprises:
identifying, based on sensor data, that the position of the wearable device is moved outside of the first area;
based on identifying that the position of the wearable device is moved outside of the first area, providing an augmented reality; and
based on a field-of-view (FoV) of the wearable device corresponding to the first area while providing the augmented reality, displaying a virtual object representing the software application associated with the first area together with a camera image.

11. The method of claim 10, wherein the providing the augmented reality comprises:
displaying, on the camera image displayed based on the augmented reality, another virtual object indicating a border line of the first area.

12. The method of claim 9 to claim 11, further comprises:
based on identifying the position of the wearable device spaced apart from the first area, displaying another virtual object for identifying whether to cease execution of the software application corresponding to the screen on the display.

13. The method of claim 12, wherein the displaying the another virtual object further comprises:
in response to another input indicating cessation of execution of the software application, displaying an icon corresponding to the software application on a portion of the display associated with the first area.

14. The method of claim 9 to claim 13, wherein the displaying the one or more virtual objects comprises:
identifying, based on categories of each of a plurality of software applications stored in memory of the wearable device and sizes of the plurality of areas, one or more software applications associated with the first area.

15. A non-transitory computer readable storage medium storing instructions, wherein the instructions, when executed by a wearable device, cause the wearable device to perform the operations of any one of claims 9 to 14.
